(19) Europäisches Patentamt
European Patent Office
Office européen des brevets

(11) **EP 4 621 396 A1**

(12) **EUROPEAN PATENT APPLICATION**

(43) Date of publication:
**24.09.2025 Bulletin 2025/39**

(21) Application number: **24164816.1**

(22) Date of filing: **20.03.2024**

(51) International Patent Classification (IPC):
**G01N 23/06** (2018.01)   **G06T 7/11** (2017.01)
**G06V 10/762** (2022.01)

(52) Cooperative Patent Classification (CPC):
**G01N 23/06; G06T 7/11; G06V 10/762;**
G01N 2223/102

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **FEI Company**
**Hillsboro, OR 97124-5793 (US)**
• **Universiteit Antwerpen**
**2000 Antwerpen (BE)**

(72) Inventors:
• **VAN DEN BROEK, Wouter René J.**
**5651 GG Eindhoven (NL)**
• **JANNIS, Dean**
**2000 Antwerp (BE)**
• **VERBEECK, Jo**
**2000 Antwerp (BE)**

(74) Representative: **Boult Wade Tennant LLP**
**Salisbury Square House**
**8 Salisbury Square**
**London EC4Y 8AP (GB)**

(54) **SPECTRAL IMAGE ANALYSIS VIA INTEGRATION-CONSTRAINED FITTING**

(57) Systems or techniques are provided for facilitating spectral image analysis via integration-constrained fitting. In various embodiments, a system can access a spectral image of a specimen captured by a scientific instrument, wherein pixels of the spectral image respectively correspond to energy spectra. In various aspects, the system can fit in pixel-wise fashion a function to the energy spectra, wherein the function comprises a plurality of terms that are additively combined, wherein a first term of the plurality of terms represents a fine structure of the energy spectra, and wherein an integral associated with the first term is constrained to zero. In various instances, the system can segment the spectral image by material, based on the first term.

**Description**

BACKGROUND

Various scientific instruments can capture spectral images of specimens. Analysis of such spectral images can be facilitated by fitting functions to the energy spectra represented by those spectral images.

SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate spectral image analysis via integration-constrained fitting are described.

According to one or more embodiments, a system is provided. The system can comprise a non-transitory computer-readable memory that can store computer-executable components. The system can further comprise a processor that can be operably coupled to the non-transitory computer-readable memory and that can execute the computer-executable components stored in the non-transitory computer-readable memory. In various embodiments, the computer-executable components can comprise an access component that can access a spectral image of a specimen captured by a scientific instrument, wherein pixels of the spectral image respectively correspond to energy spectra. In various aspects, the computer-executable components can comprise a fitting component that can fit in pixel-wise fashion a function to the energy spectra, wherein the function comprises a plurality of terms that are additively combined, wherein a first term of the plurality of terms represents a fine structure of the energy spectra, and wherein an integral associated with the first term is constrained to zero. In various instances, the computer-executable components can comprise an execution component that can segment the spectral image by material, based on the first term.

According to one or more embodiments, a computer-implemented method is provided. In various embodiments, the computer-implemented method can comprise accessing, by a device operatively coupled to a processor, a spectral image of a specimen captured by a scientific instrument, wherein pixels of the spectral image respectively correspond to energy spectra; fitting, by the device and in pixel-wise fashion, a function to the energy spectra, wherein the function comprises a plurality of terms that are additively combined, wherein a first term of the plurality of terms represents a fine structure of the energy spectra, and wherein an integral associated with the first term is constrained to zero; and segmenting, by the device, the spectral image by material, based on the first term.

According to one or more embodiments, a computer program product for facilitating spectral image analysis via integration-constrained fitting is provided. In various embodiments, the computer program product can comprise a non-transitory computer-readable memory having program instructions embodied therewith. In various aspects, the program instructions can be executable by a processor to cause the processor to access a spectral image of a specimen captured by an electron energy-loss microscope, wherein pixels of the spectral image respectively correspond to energy-loss spectra; fit in pixel-wise fashion a function to the energy-loss spectra, wherein the function comprises a fine structure term, and wherein an integral related to the fine structure term is constrained to zero; and segment the spectral image based on the fine structure term and not based on a remainder of the function.

DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.

FIG. 1 illustrates an example, non-limiting block diagram of a scientific instrument module in accordance with various embodiments described herein.
FIG. 2 illustrates an example, non-limiting flow diagram of a computer-implemented method in accordance with various embodiments described herein.
FIG. 3 illustrates a block diagram of an example, non-limiting system that facilitates spectral image analysis via integration-constrained fitting in accordance with one or more embodiments described herein.
FIG. 4 illustrates an example, non-limiting block diagram of a spectral image in accordance with one or more embodiments described herein.
FIG. 5 illustrates a block diagram of an example, non-limiting system including a fitted function comprising a background term, an atomic cross-section term, and a fine structure term that facilitates spectral image analysis via integration-constrained fitting in accordance with one or more embodiments described herein.

FIGs. 6-13 illustrate example, non-limiting block diagrams of a fitted function and its constituent terms in accordance with one or more embodiments described herein.

FIG. 14 illustrates a block diagram of an example, non-limiting system including a segmentation mask that facilitates spectral image analysis via integration-constrained fitting in accordance with one or more embodiments described herein.

FIG. 15 illustrates an example, non-limiting block diagram showing how a segmentation mask can be generated in accordance with one or more embodiments described herein.

FIGs. 16-23 illustrate example, non-limiting simulation results in accordance with one or more embodiments described herein.

FIG. 24 illustrates an example, non-limiting block diagram of a graphical user interface that can be used in the performance of some or all of the methods or techniques disclosed herein, in accordance with various embodiments described herein.

FIG. 25 illustrates an example, non-limiting block diagram of a computing device that can perform some or all of the methods or techniques disclosed herein, in accordance with various embodiments described herein.

FIG. 26 illustrates an example, non-limiting block diagram of a scientific instrument support system in which some or all of the methods or techniques disclosed herein may be performed, in accordance with various embodiments described herein.

FIG. 27 illustrates a block diagram of an example, non-limiting operating environment in which one or more embodiments described herein can be facilitated.

FIG. 28 illustrates an example networking environment operable to execute various implementations described herein.

## DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

A scientific instrument (e.g., mass spectrometer, charged-particle microscope) can be any suitable computerized device that can capture or generate electronic measurements in a scientific, laboratory, research, or clinical operational context (e.g., that can capture or generate spectroscopic images or composition spectra). To facilitate the capture or generation of such electronic measurements, scientific instruments can leverage complex arrangements of actuatable parts (e.g., ion sources, ion lenses, heaters, coolers, fluid valves, fluid pumps, circuit switches, specimen stages, apertures), sensors (e.g., ion detectors, voltmeters, thermistors, potentiometers, pressure gauges), or consumables (e.g., carrier fluids, calibrants, filters).

Various scientific instruments (e.g., electron energy-loss microscopes) can capture spectral images of specimens. A spectral image can be an array of pixels that depict a specimen, but instead of each pixel representing one respective intensity value (e.g., a measured Hounsfield unit value), each pixel can instead represent a respective energy spectrum. In other words, each pixel can have a plurality of measured intensities or counts that are distributed across a range of defined energy bins. In still other words, a scientific instrument that generates a spectral image of a specimen can be considered as counting, for each of those defined energy bins, how many charged particles (e.g., electrons) belonging to that bin impacted the specimen at the location of each pixel. Such energy spectra can be analyzed to determine or uncover information about the specimen (e.g., electronic structures of chemical compounds in the specimen).

Analysis of a spectral image can be facilitated by fitting functions to the energy spectra represented by the pixels of that spectral image. In particular, an energy spectrum of a pixel can be modeled as an additive or multiplicative combination of a background, an atomic cross-section, and a fine structure. The background can be expressed via one or more monotonically decaying powerlaw functions. The atomic cross-section can be expressed via one or more stochastic functions representing the probabilities that a given incident excitation (e.g., charged-particle beam) will scatter in a given way upon colliding with given types of atoms. The fine structure can be expressed via a spline made up of any suitable basis functions, such as polynomials or rectangular functions. Note that the background can be considered as an uninteresting or otherwise uninformative constituent of the energy spectrum. Additionally, although fitted coefficients (e.g., amplitudes) of the atomic cross-section can indicate interesting or informative characteristics of a specimen (e.g., such as abundance of chemical compounds in the specimen), the general shape of the atomic cross-section can be already known (e.g., whatever charged-particle beam characteristics that are used by the scientific instrument to capture the spectral image can be controllably selected, and it is understood how those charged-particle beam characteristics can be used to compute (up to a scaling factor) stochastic atomic cross-section functions for desired atoms). Accordingly, in certain circumstances or contexts, the atomic-cross section can be considered as a less interesting or less informative constituent of the energy spectrum. In contrast, the fine structure can be considered as the unknown, and thus most interesting or most informative, constituent of the energy spectrum. Indeed, the fine structure can be considered as carrying or conveying information regarding electronic structures (e.g., the influence of surrounding atoms or compounds) of the specimen. In still other words, a goal or objective of identifying fitted functions for the energy spectra of the spectral image can be to discover or obtain the specific forms or shapes of the fine structures of those energy spectra. Accordingly, once the energy spectra of the spectral image are fitted, the fine structures (rather than the backgrounds and atomic cross-sections) of those energy spectra can be used to perform any suitable downstream analysis of the spectral image, such as image classification or image segmentation (e.g., determining the electronic structures or compounds at different locations in the specimen).

Unfortunately, as the inventors of various embodiments described herein recognized, existing techniques for modeling the fine structures of energy spectra suffer from various disadvantages.

First, the basis functions that are used to model the fine structure can take various input parameters as arguments. One example of such an argument is energy window (otherwise referred to as energy width). The present inventors realized that existing techniques are excessively sensitive to the choice of energy window. That is, the present inventors recognized that changes in the chosen or selected energy window can lead to commensurate changes in the obtained fine structures and thus in the downstream image classifications or image segmentations. However, such downstream changes should not occur (e.g., different energy windows should lead to the same or similar downstream results). Accordingly, existing techniques can be considered as being unstable with respect to chosen energy window.

Second, aside from excessive sensitivity to choice of energy window, the present inventors also realized that existing techniques suffer from generally insufficient downstream analysis accuracy. In particular, the present inventors recognized that, when fine structures are obtained via existing techniques, whatever downstream results, image classifications, or image segmentations that are derived from those fine structures are often less accurate than they otherwise could or should be (e.g., determined electronic structures are often incorrect; numerous pixels are often misclassified or mis-segmented). Additionally, because atomic cross-sections and fine structures are simultaneously fitted to energy-spectra, atomic cross-sections and fine structures can be considered as being interdependent on one another (e.g., the fitted values of the atomic cross-sections depend upon the fitted values of the fine structures, and vice versa). So, because the fine structures of existing techniques are often inaccurate, the fitted amplitudes of atomic cross-sections computed by existing techniques are also often inaccurate, which can lead to determined chemical abundances that are too high, too low, or otherwise imprecise. Thus, existing techniques can be considered as being insufficiently reliable.

Accordingly, systems or techniques that can ameliorate one or more of these technical problems can be desirable.

Various embodiments described herein can address one or more of these technical problems. One or more embodiments described herein can include systems, computer-implemented methods, apparatus, or computer program products that can facilitate spectral image analysis via integration-constrained fitting. In particular, as mentioned above, the energy spectrum of a pixel of a spectral image can be fitted with a function that is made up of three distinct terms: the background; the atomic cross-section; and the fine structure. That is, each pixel can be considered as having its own respective background, its own respective atomic cross-section, and its own respective fine structure. As also mentioned above, downstream analyses (e.g., image classification, image segmentation) can be performed based on the fine structures, rather than based on the backgrounds and atomic cross-sections, of those pixels. Now, when existing techniques are implemented, those downstream analyses exhibit excessively high energy window sensitivity (e.g., large differences in image classifications or segmentations depending upon choice of energy window), and excessively low accuracy (e.g., very many misclassified or mis-segmented pixels). The present inventors realized that energy window sensitivity can be reduced and that downstream analysis accuracy can be increased, by constraining one or more integrals associated with the fine structures of the pixels of the spectral image. Specifically, the present inventors recognized that, during the fitting process, the fine structure of a pixel can be represented not just by a spline, but by a spline that can be related to an integral with respect to energy (or energy-loss) that is constrained to zero. In other words, a weighted integral of the spline can be constrained to zero. The present inventors experimentally verified that enforcement of such zero-integral constraint on the fine structure can both reduce energy window sensitivity and increase downstream analysis accuracy. In other words, enforcement of such zero-integral constraint can cause the resultant fine structures of a spectral image to better represent or convey information regarding electronic structures or compounds in a specimen.

Various embodiments described herein can be considered as a computerized tool (e.g., any suitable combination of computer-executable hardware or computer-executable software) that can facilitate spectral image analysis via integration-constrained fitting. In various aspects, such computerized tool can comprise an access component, a fitting component, or an execution component.

In various embodiments, there can be a scientific instrument. In various aspects, the scientific instrument can be any suitable computerized device that can electronically capture or generate a spectral image of any suitable specimen (e.g., a lamella specimen). As a non-limiting example, the scientific instrument can be an electron energy-loss microscope.

In any case, the spectral image can be a three-dimensional array, where two dimensions of such array represent pixels that collectively depict or illustrate the specimen, and where a third dimension of such array represents pixel-wise energy spectra recorded by the scientific instrument. As a non-limiting example, the spectral image can be an $x$-by-$y$-by-$z$ array, for any suitable positive integers $x$, $y$, and $z$. In such case, the spectral image can be considered as comprising a total of $xy$ pixels, and each of those pixels can be considered as having a respective distribution across $z$ energy bins (e.g., these $z$ energy bins can be sized according to any suitable electron-volt (eV) resolution that is supported by the detectors of the scientific instrument, so as to achieve any suitable level of energy-loss granularity). In other words, each pixel can be considered as representing or demarcating a unique two-dimensional location on the specimen, and the scientific instrument can count or measure how many incident ions (e.g., electrons) emitted by the scientific instrument and belonging to each of those $z$ energy bins impacted the specimen at each of those unique two-dimensional locations.

In various instances, it can be desired to segment or otherwise analyze the spectral image, such as to determine how much of which chemical elements or compounds are located where in the specimen. In various cases, the computerized tool described herein can facilitate such segmentation or analysis.

In various embodiments, the access component of the computerized tool can electronically access the spectral image. For instance, the access component can receive, retrieve, or otherwise obtain the spectral image from any suitable centralized or decentralized data structure (e.g., graph data structure, relational data structure, hybrid data structure). As a non-limiting example, the access component can receive, retrieve, or obtain the spectral image from the scientific instrument itself. In any case, the access component can be considered as a conduit through which other components of the computerized tool can electronically interact with (e.g., read, write, edit, copy, manipulate) the spectral image.

In various embodiments, the fitting component of the computerized tool can electronically fit, in pixel-wise fashion, a function to the energy spectra represented or conveyed by the spectral image. In various aspects, the function can comprise a background term, an atomic cross-section term, and a fine structure term. In various instances, as described herein, the fine structure term can be integration-constrained to zero.

More specifically, consider a given pixel of the spectral image. In various cases, the given pixel can have a given energy spectrum. To continue the above example where the spectral image is an $x$-by-$y$-by-$z$ array, the given energy spectrum can be a distribution of ion counts or intensities across $z$ energy bins. In other words, the given energy spectrum can be considered as a sequence of $z$ tuples, with each tuple being a distinct energy bin and a corresponding count or intensity. In various aspects, the fitting component can fit (e.g., via any suitable fitting technique, such as least sum of squares (LSS)) a function to such sequence of tuples, where incident energy (or energy-loss) can be considered as an independent variable of such function, and where count or intensity can be considered as a dependent variable of such function. Now, in various instances, that function can be the additive combination of three distinct terms: a background term; an atomic cross-section term; and a fine structure term.

In various cases, the background term can be any suitable number of monotonically decaying powerlaw functions (e.g., can be a single monotonically decaying powerlaw function, or can be the sum of multiple monotonically decaying powerlaw functions) that contain any suitable number of first fitting coefficients. In some instances, various of the first fitting coefficients can be exponents of the monotonically decaying powerlaw functions. In some instances, various of the first fitting coefficients can be scaling factors that are respectively multiplied by the monotonically decaying powerlaw functions.

In various aspects, the atomic cross-section term can be any suitable number of stochastic atomic cross-section probability functions (e.g., can be a single stochastic atomic cross-section probability function, or can be the sum of multiple stochastic atomic cross-section probability functions) that contain any suitable number of second fitting coefficients. In various cases, the second fitting coefficients can be scaling factors that are respectively multiplied by the stochastic atomic cross-section probability functions.

In various instances, the fine structure term can be a spline having any suitable basis functions that contain any suitable number of third fitting coefficients. In various cases, the basis functions can be polynomials of any suitable order or degree (e.g., zeroth-order or constant polynomials, first-order or linear polynomials, second-order or quadratic polynomials, third-order or cubic polynomials), and the third fitting coefficients can be scaling factors that are multiplied by respective terms of such basis functions or by respective ones of those basis functions. In such situations, neighboring polynomials of the spline can be forced to agree on value and first derivative at their respective boundaries. In other cases, the basis functions can be any suitable non-polynomial functions, such as rectangular functions (e.g., differences between Heaviside step-functions) or triangular functions (e.g., based on the absolute value function), each of which can be multiplied by a distinct one of the third fitting coefficients. No matter the basis functions chosen for the spline, the spline can be piecewise-defined over any suitable intervals. In some instances, such intervals can be linearly-spaced or equally-spaced. In other instances, such intervals can be quadratically-spaced (e.g., such that each successive interval is proportional to the square of the previous interval).

In some cases, the atomic cross-section term and the fine structure term can be convolved with a low-loss (or, equivalently, high-energy) portion of the given energy spectrum. More specifically, various of the $z$ energy bins that the given energy spectrum spans can be considered as forming a low-loss (or high-energy) region of the given energy spectrum. As a non-limiting example, whatever bins cover or span 0 eV loss to 200 eV loss can be considered as collectively forming the low-loss (or high-energy) region of the given energy spectrum. Note that interesting electronic activity (e.g., the occurrence of K-edges in electron energy-loss spectra) usually occurs in energy bands or bins that are past 200 eV loss. Accordingly, whatever counts or intensities are measured in the low-loss region of the given energy spectrum (e.g., are measured before 200 eV loss) can be convolved with the atomic cross-section term and with the fine structure term. Such convolution can help to reduce or otherwise control for specimen-thickness effects in the fitted function.

In any case, the fitting component can fit (e.g., via LSS) the function to the given energy spectrum. Such fitting can be considered as identifying which specific values of the first, second, and third fitting coefficients cause an error metric (e.g., sum of squared errors) between the given energy spectrum and the function to become minimized or approximately minimized (e.g., to fall below any suitable threshold). At such point, the function can be considered as closely matching the given energy spectrum. However, during such fitting, an integral related to the fine structure term with respect to energy (or energy-loss) can be constrained to zero. In other words, fitting the function to the given energy spectrum can be considered as identifying specific values of the first, second, and third fitting coefficients that not just cause the error metric to be minimized, but that also cause that integral related to the fine structure term to be as close to zero as feasible (e.g., to be within any suitable threshold margin of zero).

In various embodiments, the execution component of the computerized tool can electronically perform any suitable downstream analysis on the spectral image, based on the fitted fine structure terms that are identified by the fitting component. In other words, the execution component can perform such downstream analysis without regard to the fitted background terms or the fitted atomic cross-section terms of the spectral image. As a non-limiting example, the execution component can compute or generate a segmentation mask for the spectral image, by applying any suitable clustering algorithm (e.g., K-means clustering) to the fitted fine structure terms, or by executing any suitable trained machine learning segmenter (e.g., deep learning neural network) on the fitted fine structure terms. In either case, the segmentation mask can be considered as indicating to which one of two or more defined classes each pixel of the spectral image belongs (e.g., the two or more defined classes can represent two or more defined chemical compounds or oxidation states that are known to be present in the specimen, and the segmentation mask can indicate which pixels of the spectral image are made up of which of those defined chemical compounds or oxidation states). In various aspects, the execution component can visually render the segmentation mask on any suitable computer screen or monitor. In various instances, the execution component can electronically transmit the segmentation mask to any other suitable computing device.

Note that the present inventors experimentally verified that the segmentation mask can be considered as having heightened accuracy or reliability, and as having lower sensitivity to choice of energy window, than would otherwise be possible, due to the fact that the fitted fine structure terms of the spectral image are integral-constrained to zero. In other words, the segmentation mask would be less accurate (e.g., would have a higher number of mis-classified pixels), and would vary more widely with choice of energy window, if the fitted fine structure terms of the spectral image were identified without having their integrals constrained to zero.

Accordingly, the computerized tool described herein can be considered as performing improved analysis of spectral images, and the computerized tool described herein can achieve such improvement by enforcing zero-integral constraints on fitted fine structure terms.

Various embodiments described herein can be employed to use hardware or software to solve problems that are highly technical in nature (e.g., to facilitate spectral image analysis via integration-constrained fitting), that are not abstract and that cannot be performed as a set of mental acts by a human. Further, some of the processes performed can be performed by a specialized computer (e.g., electron energy-loss microscope) for carrying out defined acts related to spectral imaging.

For example, such defined acts can include: accessing, by a device operatively coupled to a processor, a spectral image of a specimen captured by a scientific instrument, wherein pixels of the spectral image respectively correspond to energy spectra; fitting, by the device and in pixel-wise fashion, a function to the energy spectra, wherein the function comprises a plurality of terms that are additively combined, wherein a first term of the plurality of terms represents a fine structure of the energy spectra, and wherein an integral associated with the first term is constrained to zero; and segmenting, by the device, the spectral image by material, based on the first term. In various aspects, the plurality of terms can further comprise a second term that represents a monotonically decaying background of the energy spectra and a third term that represents an atomic cross-section of the energy spectra.

Such defined acts are inherently computerized. Indeed, a scientific instrument, such as an electron energy-loss microscope, is a highly-technical computerized device comprising specific computerized hardware (e.g., temperature sensors, pressure sensors, voltage sensors, ion beam emitters, ion focusing lenses, mass analyzers, ion detectors, beam apertures, fluid valves). A scientific instrument and the operations that it performs cannot be implemented by the human mind, or by a human with pen and paper, in any reasonable or practicable way without computers. Furthermore, a spectral image is a specific type of pixel array, where each pixel has its own measured energy spectrum or distribution (as opposed to its own Hounsfield unit value). A spectral image cannot be generated or captured by the human mind, or by a human with pen and paper, in any reasonable or practicable way without computers. Further still, segmentation of a spectral image is an inherently computerized task in which each pixel of the spectral image is classified into one of two or more defined classes, thereby yielding a segmentation mask that shows which pixels of the spectral image belong to which classes. It makes no sense whatsoever to discuss the computerized task of image segmentation outside of a computing context.

Moreover, various embodiments described herein can integrate into a practical application various teachings relating to spectral image analysis via integration-constrained fitting. As explained above, when a spectral image of a specimen is captured, each pixel of the spectral image has its own energy spectrum. As also explained above, each of those energy spectra can be fitted with a function that is made up of three distinct terms: a background term; an atomic cross-section term; and a fine structure term. The background term can be well-modeled by one or more monotonically decaying powerlaw functions; accordingly, the background term can be considered as having a known shape or form and thus as not being the quantity of interest. Likewise, the atomic cross-section term can be well-modeled, up to scaling factors or amplitudes, by known stochastic or probabilistic functions that depend upon which particular atoms one is interested in modeling; accordingly, the atomic cross-section term can also be considered as having a known shape or form and thus as not being the quantity of interest. However, the fine structure term, which can be modeled a spline of any suitable basis functions (e.g., polynomial basis functions, rectangular basis functions, triangular basis functions), can be considered as capturing or representing whatever constituent information remains in the energy spectra of the spectral image, after the background term and the atomic cross-section term are accounted for. In other words, the fine structure term can be considered as having an unknown shape or form and thus as being the quantity of interest. In still other words, the fine structure term can be considered as being the most informative constituent of the energy spectra of the spectral image, and such most informative constituent can be leveraged to determine how much of which chemical compounds are depicted where in the spectral image. Unfortunately, the present inventors realized that existing techniques cause such downstream determinations to be excessively sensitive or unstable (e.g., to vary widely with choice of energy window) and to be excessively unreliable or inaccurate (e.g., prone to mis-classifications or mis-segmentations).

Various embodiments described herein can help to ameliorate one or more of such technical problems. In particular, various embodiments described herein can, as mentioned above, involve fitting a function to the energy spectra of the spectral image, where the function is made up of the background term, the atomic cross-section term, and the fine structure term. However, rather than performing or conducting such fitting in an unconstrained manner, various embodiments described herein can perform or conduct such fitting while simultaneously enforcing a zero-integral constraint on the fine structure term. That is, specific values of whatever fitting coefficients are included in the background term, in the atomic cross-section term, and in the fine structure term can be identified not only so that an error metric between the energy spectra and the function is minimized, but also so that an integral of the fine structure term with respect to incident energy or energy-loss is constrained to zero (e.g., is kept within any suitable threshold margin of zero). The present inventors conducted various experiments that verified or validated that such zero-integral constraint caused downstream analysis to be less sensitive or unstable (e.g., to vary less across different energy windows) and also caused such downstream analysis to be more accurate or reliable (e.g., to result in fewer pixel mis-classifications or mis-segmentations). Accordingly, various embodiments described herein can be considered as a better or improved technique for fitting or identifying the fine structures of energy spectra of spectral images, as compared to existing techniques. For at least these reasons, various embodiments described herein can be considered as a concrete and tangible technical improvement in the field of spectral imaging. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., ion beam emitters, ion focusing lenses, carrier fluid valves/pumps) of real-world scientific instruments (e.g., electron energy-loss microscopes), perform real-world analyses on real-world data captured by those real-world scientific instruments (e.g., compute segmentation masks for energy-loss spectral images), and can electronically render the results of such real-world analyses on real-world computer screens (e.g., can visually render computed segmentation masks to be viewable by users or technicians).

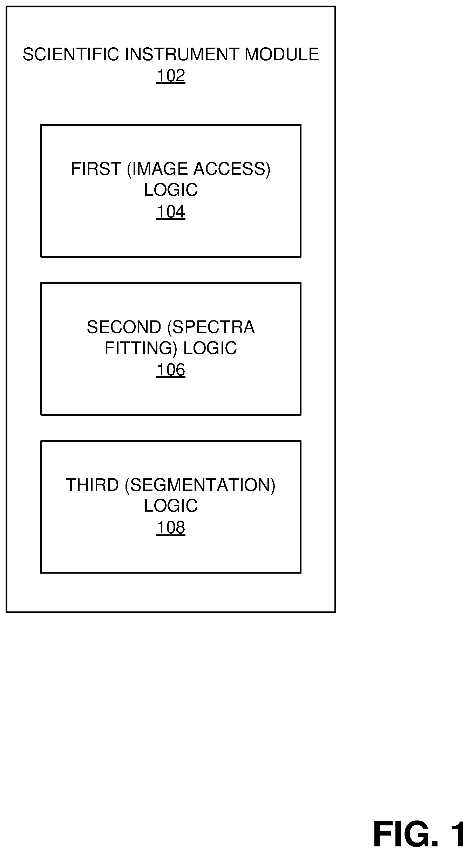

FIG. 1 illustrates an example, non-limiting block diagram of a scientific instrument module 102 in accordance with various embodiments described herein.

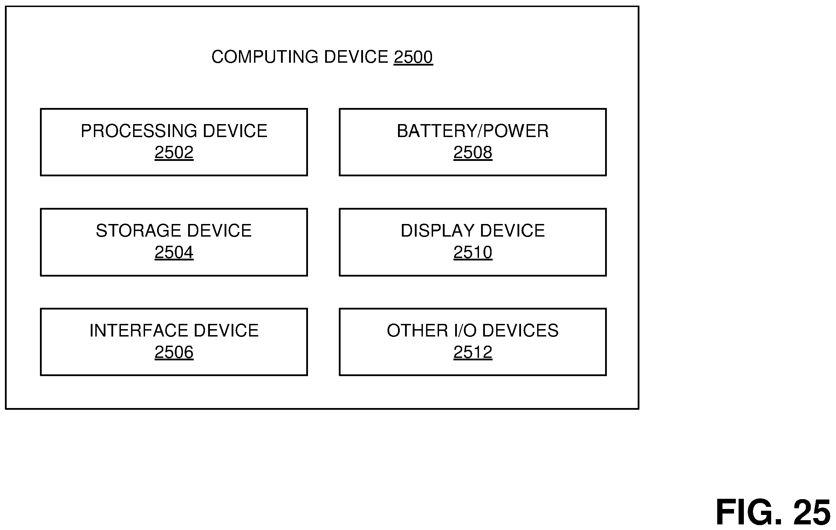

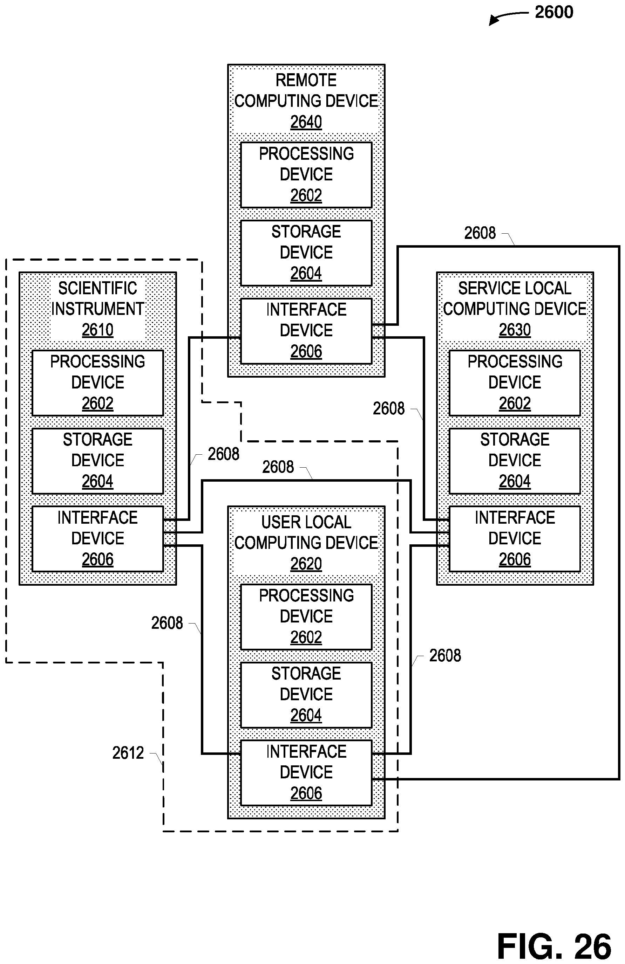

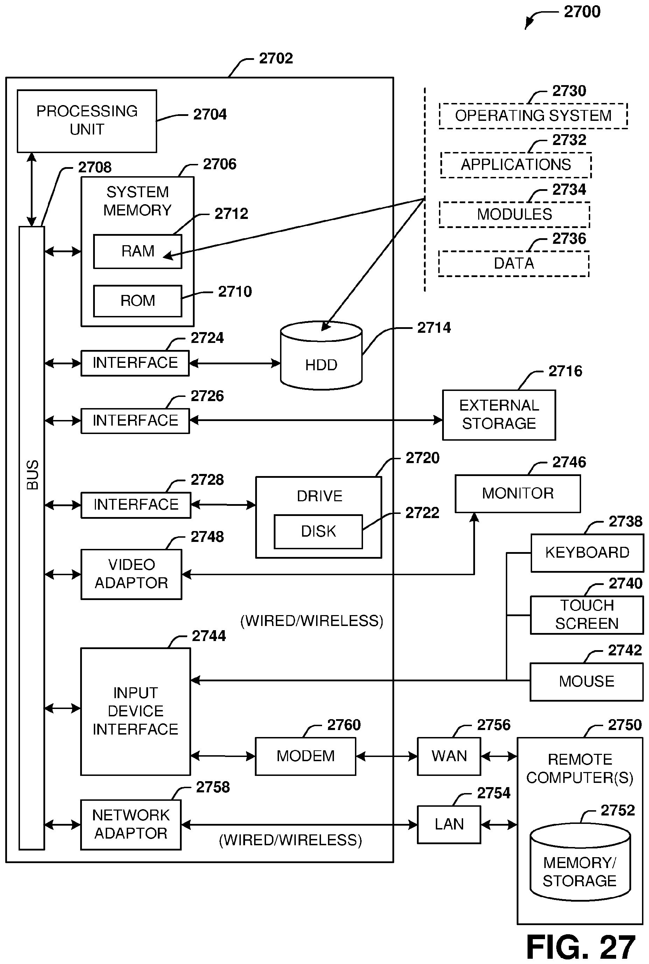

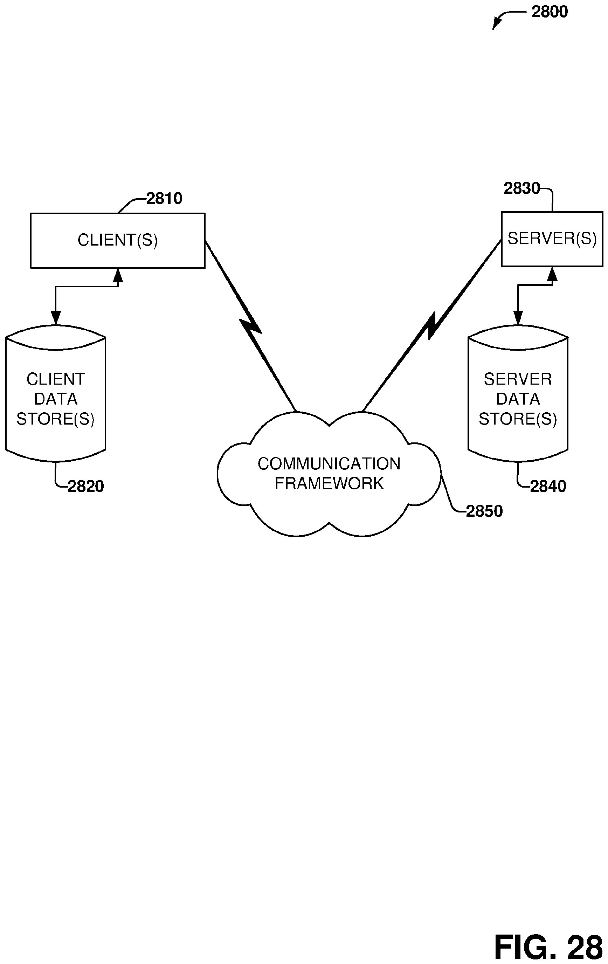

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIGs. 25 and 27, and examples of systems or networks of interconnected computing devices, in which the scientific instrument module 102 may be implemented across one or more of the computing devices, are discussed herein with reference to FIGs. 26 and 28.

The scientific instrument module 102 can include first logic 104, second logic 106, and third logic 108. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical specimen (e.g., of a known or unknown mixture, compound, or collection of matter). As a non-limiting example, a scientific instrument can be a mass spectrometer that is operatively coupled to a gas chromatograph or a liquid chromatograph. In such case, the scientific instrument can measure or determine ion spectra (e.g., relative ion abundance as a function of mass-to-charge ratio) of the analytical specimen. As another non-limiting example, a scientific instrument can be a scanning electron microscope. In such case, the scientific instrument can measure or determine a surface topography of the analytical specimen. As yet another non-limiting example, a scientific instrument can be a transmission electron microscope. In such case, the scientific instrument can measure or determine internal structural details of the analytical specimen. As a more general non-limiting example, a scientific instrument can be any suitable type of charged-particle microscope (e.g., some types of microscopes can use beams of non-electron ions to capture images).

In various embodiments, the first logic 104 can access a spectral image that is captured or otherwise generated by the scientific instrument. In various aspects, the spectral image can be any suitable pixel array, where each pixel can comprise its own respective energy spectrum. As a non-limiting example, the scientific instrument can be an electron energy-loss microscope, and the spectral image can be an electron energy-loss spectroscopy (EELS) image, where each pixel can contain measured counts or measured intensity values across a range of defined energy-loss bins or bands. In other words, each pixel can represent a respective two-dimensional location on an analytical specimen, and each pixel can indicate how many electrons fired from the scientific instrument and belonging to each of those defined energy-loss bins or bands struck the analytical specimen at that respective two-dimensional location during a scan performed by the scientific instrument.

In various embodiments, the second logic 106 can fit, in pixel-wise fashion, a function to the energy spectra represented or conveyed by the spectral image. In various aspects, the function can comprise a plurality of additively-combined terms. In particular, the function can be the sum of a background term, an atomic cross-section term, and a fine structure term. In various instances, the background term can be made up of decaying powerlaw functions that are multiplicatively scaled according to respective fitting coefficients. In various cases, the atomic cross-section term can be made up of stochastic or probabilistic cross-section functions multiplicatively scaled according to respective fitting coefficients. In various aspects, the fine structure term can be made up of splines whose individual components (e.g., constants, linear terms, quadratic terms, cubic terms) are multiplicatively scaled according to respective fitting coefficients, or can be made up of sums of step-functions that are multiplicatively scaled according to respective fitting coefficients. In some instances, the atomic cross-section term and the fine structure term can be convolved with low-loss portions of the energy spectra of the spectral image. In various cases, as described herein, an integral of the fine structure term can be constrained to zero during fitting. In various aspects, such integration-constraint can cause the finalized, resultant, or fitted fine structure term to more correctly, accurately, or reliably represent whatever interesting or desirable information about the analytical specimen is contained within or conveyed by the energy spectra of the spectral image.

In various embodiments, the third logic 108 can segment the spectral image by material, element, compound, or any other suitable physical or chemical properties, based on the finalized, resultant, or fitted fine structure term (and not based on the background or atomic cross-section terms). In some aspects, such segmentation can be facilitated by applying any suitable unsupervised clustering technique (e.g., K-means clustering) to the finalized, resultant, or fitted fine structure terms of the pixels of the spectral image. In other aspects, such segmentation can instead be facilitated by executing any suitable trained machine learning model (e.g., deep learning neural network) on the finalized, resultant, or fitted fine structure terms of the pixels of the spectral image. In some cases, such segmentation can be accomplished by analyzing the scalar outputs of the finalized, resultant, or fitted fine structure terms. In other cases, such segmentation can instead be accomplished by analyzing the fitting coefficients of the finalized, resultant, or fitted fine structure terms. In either case, the segmentation can be more accurate or more reliable than it otherwise would have been, due to the fine structure term being integration-constrained to zero.

Accordingly, the scientific instrument module 102 can facilitate spectral image analysis via integration-constrained fitting.

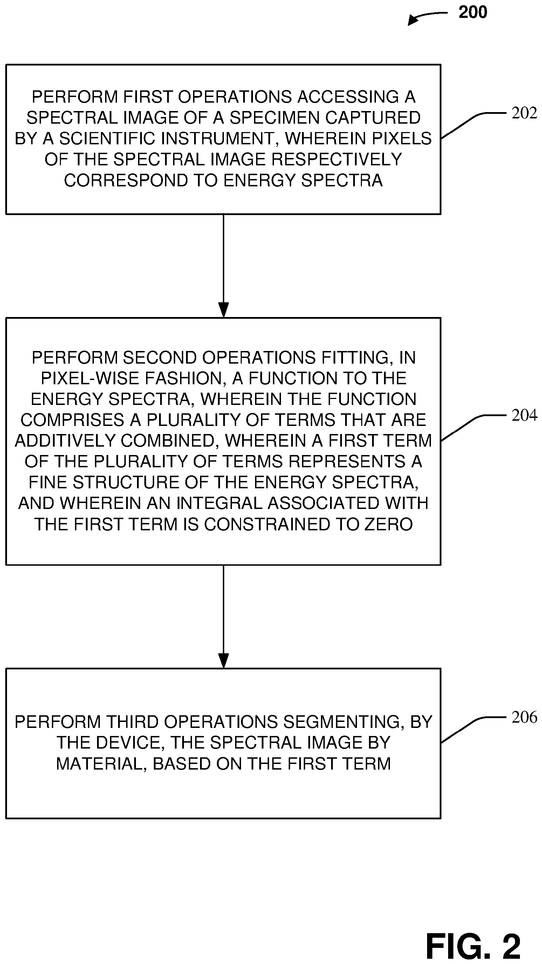

FIG. 2 is an example, non-limiting flow diagram of a computer-implemented method 200 in accordance with various embodiments described herein. The operations of the computer-implemented method 200 may be used in any suitable context to perform any suitable operations (e.g., can be performed by or used in conjunction with any of the various modules, computing devices, or graphical user interfaces described with respect to of FIGs. 1, 24, 25, 26, 27, and 28). Operations are illustrated once each and in a particular order in FIG. 2, but the operations may be reordered or repeated as desired and appropriate (e.g., different operations performed may be performed in parallel, as suitable).

In various aspects, act 202 can include performing first operations accessing, by a device operatively coupled to a processor, a spectral image of a specimen captured by a scientific instrument, wherein pixels of the spectral image respectively correspond to energy spectra. In various cases, the first logic 104 can perform or otherwise facilitate act 202.

In various instances, act 204 can include performing second operations fitting, by the device and in pixel-wise fashion, a function to the energy spectra, wherein the function comprises a plurality of terms that are additively combined, wherein a first term of the plurality of terms represents a fine structure of the energy spectra, and wherein an integral associated with the first term is constrained to zero. In various cases, the second logic 106 can perform or otherwise facilitate act 204.

In various aspects, act 206 can include segmenting, by the device, the spectral image by material, based on the first term. In various cases, the third logic 108 can perform or otherwise facilitate act 206.

Accordingly, the computer-implemented method 200 can facilitate spectral image analysis via integration-constrained fitting.

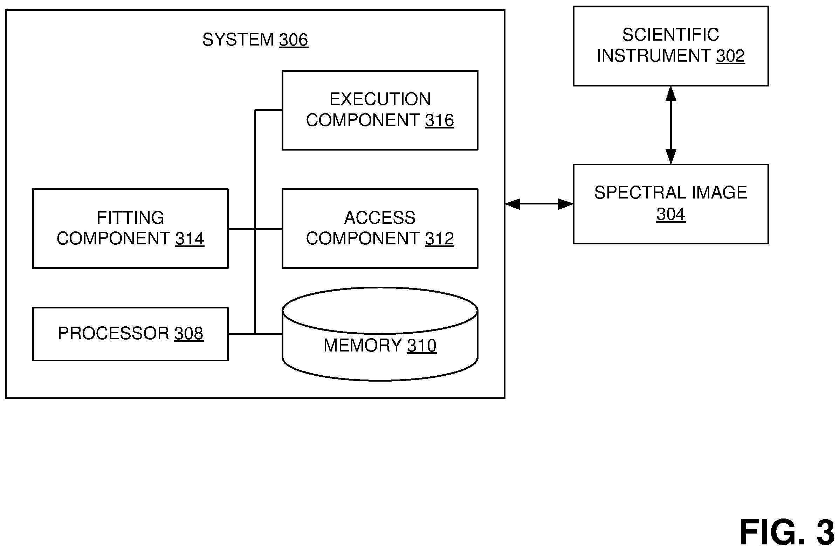

FIG. 3 illustrates a block diagram of an example, non-limiting system 306 that can facilitate spectral image analysis via integration-constrained fitting in accordance with one or more embodiments described herein.

In various embodiments, there can be a scientific instrument 302. In various aspects, the scientific instrument 302 can be as described above. That is, the scientific instrument 302 can be any suitable computerized device that can electronically measure any suitable scientifically-relevant, clinically-relevant, or research-relevant characteristic, attribute, or property of any suitable analytical specimen. In particular, the scientific instrument 302 can be an electron energy-loss microscope. In such case, the scientific instrument 302 can leverage its constituent hardware (e.g., electron sources, anodes, condenser lenses, condenser apertures, scan coils, objective lenses, objective apertures, deflectors, condensers, stigmators, electron detectors, X-ray detectors, actuatable specimen stages) to electronically generate or capture a spectral image 304 of any given analytical specimen.

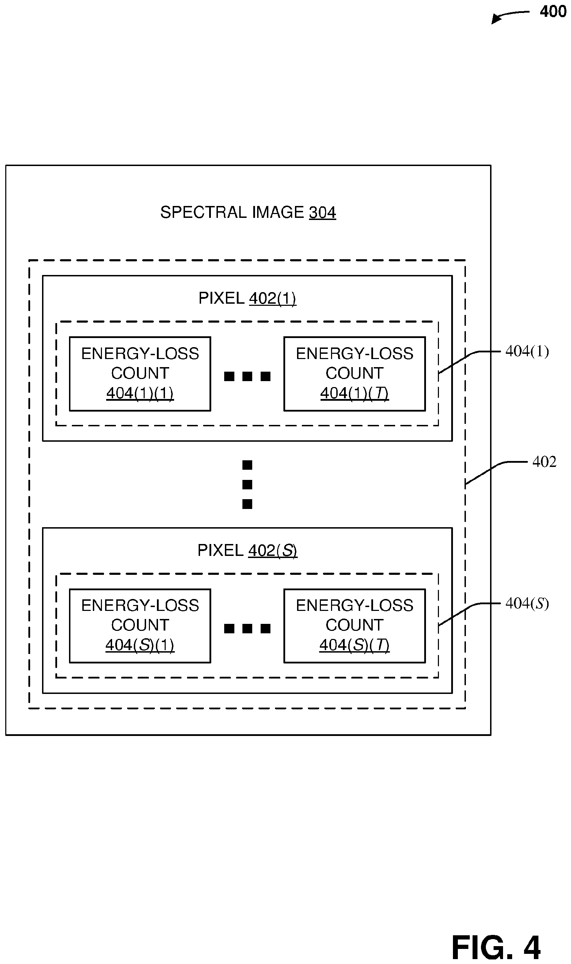

In various embodiments, the spectral image 304 can exhibit any suitable format, size, or dimensionality. More specifically, the spectral image 304 can be an array of pixels, each of which can contain a respective energy-loss spectrum. Non-limiting aspects are described with respect to FIG. 4.

FIG. 4 illustrates an example, non-limiting block diagram 400 of the spectral image 304 in accordance with one or more embodiments described herein.

In various aspects, the spectral image 304 can comprise a plurality of pixels 402. In various instances, as shown, the plurality of pixels 402 can comprise s pixels, for any suitable positive integer s: a pixel 402(1) to a pixel 402(s). In various cases, the plurality of pixels 402 can be arranged in any suitable layout or organizational format. As a non-limiting example, the plurality of pixels 402 can be arranged in a rectilinear array (e.g., in an $x$-by-$y$ array, where $xy = s$, for any suitable positive integers $x$ and $y$).

In various aspects, each of the plurality of pixels 402 can comprise a respective energy-loss spectrum. In particular, the scientific instrument 302 can be configured to perform a scan on the given analytical specimen by irradiating the given analytical specimen with an incident electron beam (or with any other suitable charged-particle beam).

Accordingly, the given analytical specimen can be impacted or struck by the electrons (or other charged-particles) of such incident beam. Now, when an electron (or other charged-particle) is emitted by the scientific instrument 302, that electron (or other charged-particle) can initially have a known amount of energy. Furthermore, when that electron (or other charged-particle) impacts or strikes the given analytical specimen, that electron (or other charged-particle) can pass through the given analytical specimen and can thus lose or dissipate some of its energy. How much energy is lost or dissipated by that electron (or other charged-particle) can depend upon the physical or chemical properties or characteristics (e.g., thickness, material composition, elemental concentration) of the given analytical specimen at whatever location at which that electron (or other charged-particle) impacted, struck, or passed through the given analytical specimen. In various instances, the scientific instrument 302 can be configured to record the quantities and energy-losses of incident electrons (or other charged-particles) that impact, strike, or pass through the analytical specimen. In particular, there can be a total of $t$ disjoint (e.g., non-overlapping) energy-loss bins or bands, for any suitable positive integer $t$ (e.g., a first energy-loss bin or band can represent an energy-loss ranging from 0 eV to just below some first eV value; a second energy-loss bin or band can represent an energy-loss ranging from that first eV value to just below some second eV value that is greater than the first eV value; a third energy-loss bin or band can represent an energy-loss ranging from that second eV value to just below some third eV value that is greater than the second eV value). In various cases, the scientific instrument 302 can be configured to count or measure how many incident electrons (or other charged-particles) belonging to respective ones of those $t$ energy-loss bins or bands strike, impact, or pass through respective physical locations on the given analytical specimen.

As a non-limiting example, the pixel 402(1) can comprise an energy-loss spectrum 404(1). In various aspects, the energy-loss spectrum 404(1) can comprise a respective energy-loss count for each of the $t$ energy-loss bins or bands. For instance, the energy-loss spectrum 404(1) can comprise an energy-loss count 404(1)(1), which can be a scalar whose magnitude indicates or is otherwise proportional to how many incident electrons (or other charged-particles) belonging to the first energy-loss bin or band struck, impacted, or passed through the given analytical specimen at whatever specific location is represented or depicted by the pixel 402(1). As another instance, the energy-loss spectrum 404(1) can comprise an energy-loss count 404(1)($t$), which can be a scalar whose magnitude indicates or is otherwise proportional to how many incident electrons (or other charged-particles) belonging to the $t$-th energy-loss bin or band struck, impacted, or passed through the given analytical specimen at whatever specific location is represented or depicted by the pixel 402(1). Thus, the energy-loss spectrum 404(1) can be considered as a sequence of bin-count tuples for the incident electrons (or other charged-particles) that struck, impacted, or passed through the analytical specimen at whatever location is represented or depicted by the pixel 402(1).

As another non-limiting example, the pixel 402(s) can comprise an energy-loss spectrum 404(s). In various aspects, the energy-loss spectrum 404(s) can comprise a respective energy-loss count for each of the $t$ energy-loss bins or bands. For instance, the energy-loss spectrum 404(s) can comprise an energy-loss count 404(s)(1), which can be a scalar whose magnitude indicates or is otherwise proportional to how many incident electrons (or other charged-particles) belonging to the first energy-loss bin or band struck, impacted, or passed through the given analytical specimen at whatever specific location is represented or depicted by the pixel 402(s). As another instance, the energy-loss spectrum 404(s) can comprise an energy-loss count 404(s)($t$), which can be a scalar whose magnitude indicates or is otherwise proportional to how many incident electrons (or other charged-particles) belonging to the $t$-th energy-loss bin or band struck, impacted, or passed through the given analytical specimen at whatever specific location is represented or depicted by the pixel 402(s). So, the energy-loss spectrum 404(s) can be considered as a sequence of bin-count tuples for the incident electrons (or other charged-particles) that struck, impacted, or passed through the analytical specimen at whatever location is represented or depicted by the pixel 402(s).

Referring back to FIG. 3, the system 306 can be electronically integrated (e.g., via any suitable wired or wireless electronic connections) with the spectral image 304 or with the scientific instrument 302. In various cases, it can be desired to segment or otherwise analyze the spectral image 304 according to material, so as to determine how much of which chemical elements or compounds are located where in the analytical specimen. In various instances, the system 306 can facilitate such segmentation or analysis, as described herein.

In various aspects, the system 306 can comprise a processor 308 (e.g., computer processing unit, microprocessor) and a non-transitory computer-readable memory 310 that is operably or operatively or communicatively connected or coupled to the processor 308. The non-transitory computer-readable memory 310 can store computer-executable instructions which, upon execution by the processor 308, can cause the processor 308 or other components of the system 306 (e.g., access component 312, fitting component 314, execution component 316) to perform one or more acts. In various embodiments, the non-transitory computer-readable memory 310 can store computer-executable components (e.g., access component 312, fitting component 314, execution component 316), and the processor 308 can execute the computer-executable components.

In various embodiments, the system 306 can comprise an access component 312. In various aspects, the access component 312 can electronically access the scientific instrument 302. That is, the access component 312 can electronically communicate or otherwise electronically interact with (e.g., transmit electronic instructions or commands to, receive electronic data from) the scientific instrument 302. Accordingly, the access component 312 can be considered as a proxy or conduit through which other components of the system 306 can interact with, communicate with, or otherwise manipulate the scientific instrument 302. In various instances, the access component 312 can electronically access the spectral image 304. That is, the access component 312 can electronically receive, electronically retrieve, or otherwise electronically obtain the spectral image 304, from any suitable electronic source or database (not shown). As a non-limiting example, the access component 312 can electronically receive, retrieve, or otherwise obtain the spectral image 304 from the scientific instrument 302. In any case, the access component 312 can be considered as a proxy or conduit through which other components of the system 306 can interact with or otherwise manipulate the spectral image 304. However, these are mere non-limiting examples. In other cases, the access component 312 can be omitted, and any other components of the system 306 can communicate or interact directly with the scientific instrument 302 or with the spectral image 304.

In various embodiments, the system 306 can comprise a fitting component 314. In various aspects, as described herein, the fitting component 314 can fit a multi-term function to the energy-loss spectra of the spectral image 304, where some term of that multi-term function can represent a fine structure of the energy-loss spectra of the spectral image 304 and can be integral-constrained to zero.

In various embodiments, the system 306 can comprise an execution component 316. In various instances, as described herein, the execution component 316 can segment or otherwise analyze the spectral image 304, based on the fine structures fitted by the fitting component, rather than based on the entireties of the energy-loss spectra of the spectral image 304.

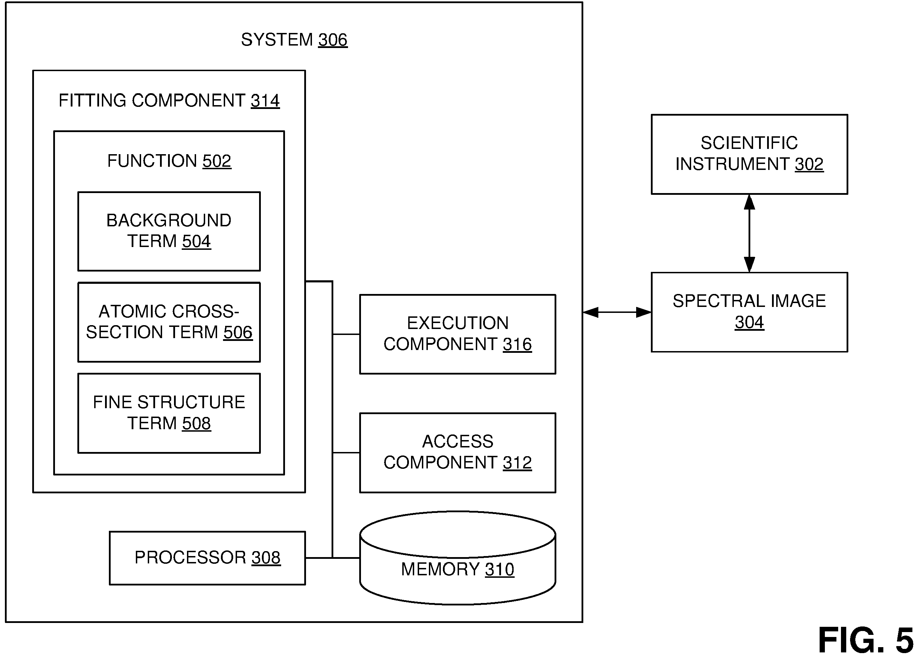

FIG. 5 illustrates a block diagram of an example, non-limiting system including a fitted function comprising a background term, an atomic cross-section term, and a fine structure term that can facilitate spectral image analysis via integration-constrained fitting in accordance with one or more embodiments described herein.

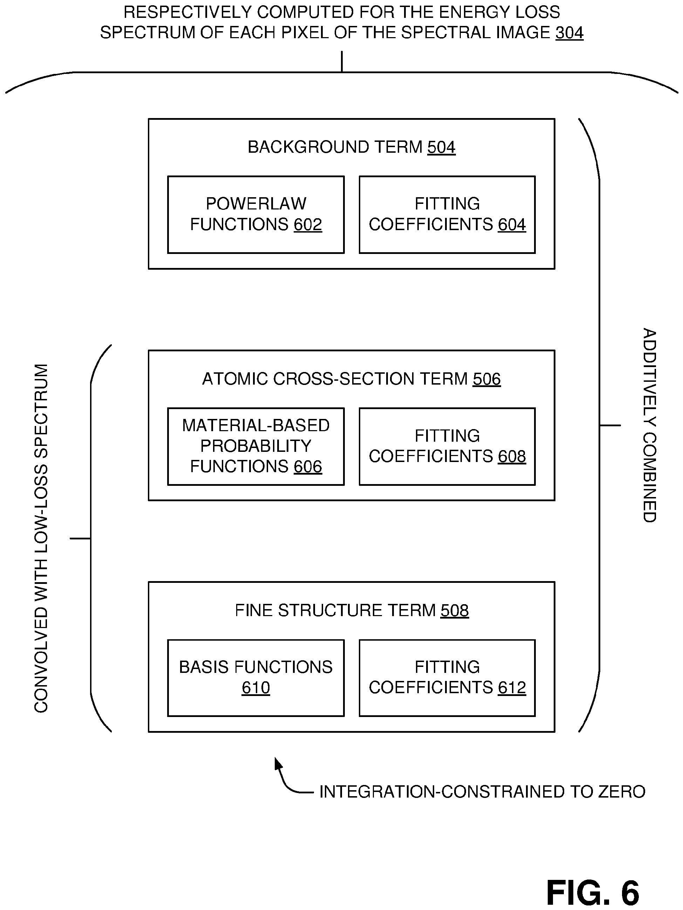

In various embodiments, the fitting component 314 can electronically fit, in pixel-wise fashion, a function 502 to the energy-loss spectra of the spectral image 304. In various aspects, the function 502 can comprise a background term 504, an atomic cross-section term 506, and a fine structure term 508. Various non-limiting aspects are described with respect to FIGs. 6-13.

FIGs. 6-13 illustrate example, non-limiting block diagrams regarding the function 502 and its constituent terms in accordance with one or more embodiments described herein.

First, consider FIG. 6. In various embodiments, the function 502 can be considered as a function that maps real-valued scalars to other real-valued scalars (e.g., can be considered as a function from $\mathbb{R} \to \mathbb{R}$). In various aspects, energy-loss (e.g., as measured in eV) can be treated or considered as an independent variable of the function 502. In various instances, count (e.g., as measured in number of incident electrons or other charged-particles) or intensity (e.g., as measured in arbitrary units, a.u.) can be treated or considered as a dependent variable of the function 502. In various cases, the function 502 can be an additive combination (e.g., a sum) of the background term 504, the atomic cross-section term 506, and the fine structure term 508.

In various aspects, the background term 504 can comprise one or more powerlaw functions 602 that can utilize one or more fitting coefficients 604. Indeed, when considered without regard to their depicted edges (e.g., K-edge, L-edge), energy-loss spectra can be expected to monotonically or exponentially decay as energy-loss rises, and such decay can be modeled or represented via powerlaw functions having negative exponents. As a non-limiting example, the background term 504 can be expressed as follows:

$$B(E) = \sum_{k=1}^{l} C_{\text{back\_}k} E^{-r_k}$$

where $E$ can represent energy-loss, $B(E)$ can represent the background term 504, $k$ can represent a summation index, $l$ can represent a total cardinality of the one or more powerlaw functions 602, $r_k$ can represent a $k$-th exponent, $E^{-rk}$ can represent a $k$-th one of the one or more powerlaw functions 602, and $C_{\text{back\_}k}$ can represent a $k$-th one of the one or more fitting coefficients 604. Note that, in some cases, $r_k$ can be constants that are known or selected *ab initio* or *a priori*. For instance, it can be the case that $l = 4$ and $r_1 = 1$, $r_2 = 2.33$, $r_3 = 3.67$, and $r_4 = 5$. In such situations, the one or more fitting coefficients 604 (e.g., $C_{\text{back\_}k}$) can be considered as multiplicatively scaling respective ones of the one or more powerlaw functions 602. However, in other cases, $r_k$ can instead be considered as additional ones of the one or more fitting coefficients 604. In such situations, some of the one or more fitting coefficients 604 (e.g., $C_{\text{back\_}k}$) can be considered as multiplicatively scaling respective ones of the one or more powerlaw functions 602, and others of the one or more fitting coefficients 604 (e.g., $r_k$) can be considered as exponents of respective ones of the one or more powerlaw functions 602. In various instances, any suitable inequality constraints can be enforced on the background term 504, so as to ensure non-negativity, monotonous descent, and convexity of the background term 504. In any case, the background term 504 can be considered as an uninteresting or uninformative constituent of the function 502, since the background term 504 already has a known format or shape (e.g., negative powerlaw function).

In various aspects, the atomic cross-section term 506 can comprise one or more material-based probability functions 606 that can utilize one or more fitting coefficients 608. In various cases, the one or more material-based probability functions 606 can be any suitable stochastic functions that describe probabilities or likelihoods of various atomic events (e.g., scattering, absorption, emission) occurring when an incident electron (or other charged-particle) beam collides with one or more given or respective atoms. For instance, the one or more material-based probability functions 606 can comprise or otherwise be based on any suitable hydrogenic wavefunctions or any suitable Hartree-Slater central field functions. In other instances, the one or more material-based probability functions 606 can be derived from generalized oscillator strength, collection angle, and acceleration voltage. As a non-limiting example, the atomic cross-section term 506 (at least with respect to an inner shell of a given atom) can be expressed as follows:

$$\sigma_{\text{atomic}}(E) = \sum_{k=1}^{n} C_{\text{atomic\_}k} \left[ \frac{4a_0{}^2 R^2}{ET} \int_0^\beta \frac{2\pi\theta}{\theta^2 + \theta_E(E)^2} \frac{df_{\text{inner\_}k}(E, \vec{q})}{dE} d\theta \right]$$

where $\sigma_{\text{atomic}}(E)$ can represent the atomic cross-section term 506, $k$ can represent a summation index, $n$ can represent a total cardinality of the one or more material-based probability functions 606 (e.g., $n$ can represent the total number of distinct types of atoms that are of interest), $C_{\text{atomic\_}k}$ can represent a $k$-th one of the one or more fitting coefficients 608, and

where $\frac{4a_0{}^2 R^2}{ET} \int_0^\beta \frac{2\pi\theta}{\theta^2 + \theta_E(E)^2} \frac{df_{\text{inner\_}k}(E, \vec{q})}{dE} d\theta$ can represent a $k$-th one of the one or more material-based probability functions 606. In various cases, $a_0$ can represent a Bohr radius, $\beta$ can represent a collection angle, $R$ can represent a Rydberg energy, $T$ can represent an effective incident energy, $\theta$ can represent an integration variable, and $\theta_E(E)$ can represent a characteristic angle. In various situations, $\theta_E(E) = \frac{E}{2\sqrt{T}}$. Moreover, $\frac{df_{\text{inner\_}k}(E, \vec{q})}{dE}$ can represent a generalized oscillator strength for a momentum $\vec{q}$ and for an inner electron shell of a $k$-th atom, which can be expressed as follows:

$$\frac{df_{\text{inner\_}k}(E, \vec{q})}{dE} = \sum_p \frac{E_p}{R} \frac{\left| \langle p | \sum_l^{Z_{\text{inner\_}k}} e^{i\vec{q}\cdot\vec{r}_l} | i \rangle \right|^2}{(\|\vec{q}\| a_0)^2} \delta(E_p - E)$$

where $Z_{\text{inner\_}k}$ can represent the cardinality of free electrons at rest in an inner electron shell of the $k$-th atom, where $|i\rangle$ can represent an initial state, where $|p\rangle$ can represent a final state, where $E_p$ can represent the transferred energy between $|i\rangle$ and $|p\rangle$, where $\sum_p$ can indicate summation over all desired final states $|p\rangle$, where $l$ can be a summation index, where $\vec{r}_l$ can be the position of an $l$-th electron in the inner shell of the $k$-th atom, and where $\delta(*)$ can represent the Dirac delta function. For small collection angles, the generalized oscillator strength can be approximated as a constant and thus be brought out of the integration with respect to $\theta$. This can yield the following:

$$\sigma_{\text{atomic}}(E) = \sum_{k=1}^{n} C_{\text{atomic\_}k} \left[ \frac{4\pi a_0{}^2 R^2}{ET} \ln\left(1 + \frac{\beta^2}{\theta_E(E)^2}\right) \frac{df_{\text{inner\_}k}(E, \vec{0})}{dE} \right]$$

Note that the generalized oscillator strength can be approximated by its value at the origin, which is why $\vec{q}$ can be replaced with 0. Also, note that the one or more fitting coefficients 608 (e.g., $C_{\text{atomic\_}k}$) can be considered as multiplicatively scaling respective ones of the one or more material-based probability functions 606. In various instances, any suitable inequality constraints can be enforced on the atomic cross-section term 506, so as to ensure that the one or more fitting coefficients 608 are non-negative. In any case, the atomic cross-section term 506, like the background term 504, can be considered as a less interesting or less informative constituent of the function 502, since the atomic cross-section term 506 already has a generally known format or shape for any given materials of interest (however, the one or more fitting coefficients 608 can, once fitted, be considered as at least partly interesting or desired, since they can indicate elemental abundances).

In various aspects, the fine structure term 508 can be a spline comprising one or more basis functions 610 that can utilize one or more fitting coefficients 612. In various cases, the one or more basis functions 610 can be any suitable mathematical functions whatsoever, and the one or more fitting coefficients 612 can multiplicatively scale respective ones, or portions thereof, of the one of the basis functions 610.

As a non-limiting example, the one or more basis functions 610 can take the form of basis splines (B-splines) of any suitable degree that are defined in piecewise polynomial fashion over various energy-loss intervals. In such case, the fine structure term 508 can be expressed as follows:

$$F(E) = \sum_{h=1}^{h_{\max}} C_{\text{fine}\_h} B_{\text{h}}(E)$$

where $F(E)$ can represent the fine structure term 508; where $E \in [E_0, E_{max}]$ with $E_0$ being the start and $E_{max}$ being the end of the energy window over which the fine structure term 508 is defined (e.g., $E_0$ can be considered as an onset energy-loss of a K-edge as indicated by a given energy-loss spectrum); where $E_h > E_{h-1}$ for all positive integers $0 < h \leq h_{\max}$; where $h_{\max}$ can be considered as indicating a total number of knots, $E_h$, over which the spline is defined; where $B_h$ can be an $h$-th B-spline; and where $C_{\text{fine}\_h}$ can represent an $h$-th one of the one or more fitting coefficients 612. In such case, any suitable equality constraints can be present so as to ensure continuity (up to any suitable number of derivatives) of the B-splines (e.g., for $n$-th degree B-splines for any suitable positive integer $n$, the intersection between any adjacent intervals of the fine structure term 508 can be guaranteed to have matching values and matching derivatives up to the $(n - 1)$-th derivative). In some cases, the intervals of the B-splines can be linearly spaced. That is, the beginning and ending points of such intervals can be linearly or evenly spaced, such that all of such intervals can be of equal length. In other cases, however, the intervals of the fine-structure term 508 can have any other suitable spacing, such as quadratic spacing. In situations where quadratic spacing is implemented, the square roots of the beginning and ending points of such intervals can be linearly or evenly spaced, such that the intervals become progressively longer. It is to be appreciated that the one or more basis functions 610 can take the form of any suitable degree of B-spline. As a non-limiting example, each of the one or more basis functions 610 can be a quadratic or second-degree B-spline. But this is a mere non-limiting example. In other cases, each of the one or more basis functions 610 can take the form of any suitable higher-degree B-spline (e.g., cubic, quartic, quintic) or any suitable lower-degree B-spline (e.g., linear).

Although various embodiments described above involve the fine structure term 508 being a spline, it is to be appreciated that these are mere non-limiting examples. In various embodiments, the fine structure term 508 (and thus the one or more basis functions 610) can take or exhibit any other suitable form.

As a non-limiting example, the one or more basis functions 610 can instead take the form of rectangular functions, each being defined over a respective energy-loss interval. In such case, the fine structure term 508 can be expressed as follows:

$$F(E) = \sum_{h=1}^{h_{\max}} C_{\text{fine}\_h} \left[ H(E - E_h) - H(E - E_h + \Delta E) \right]$$

where $H(\cdot)$ can represent the Heaviside step-function, where $E_h = E_{h-1} + \Delta E$ can be a knot as mentioned above, where $E_0$ can be an onset energy-loss of a K-edge as indicated by a given energy-loss spectrum, where $\Delta E$ can represent any suitable energy step, and where $C_{\text{fine}\_h}$ can represent an $h$-th one of the one or more fitting coefficients 612. Note that the product $h_{\max}\Delta E$ can be considered as the energy window or energy width of the fine structure term 508. As another non-limiting example, the one or more basis functions 610 can instead take the form of triangular functions. As yet another non-limiting example, the one or more basis functions 610 can instead take the form of trigonometric functions (e.g., cosine functions that oscillate at different frequencies, such as are used in the cosine transform).

No matter what specific mathematical form the one or more basis functions 610 take or exhibit, the fine structure term 508 can be considered as capturing whatever energy-loss spectra activity or behavior that is not collectively captured by the background term 504 and the atomic cross-section term 506.

In some cases, the function 502 can be an additive combination of the background term 504, the atomic cross-section term 506, and the fine structure term 508. That is, it can be the case that:

$$I(E) = B(E) + \sigma_{\text{atomic}}(E) + F(E)$$

where $I(E)$ can represent the function 502. However, in other cases, the atomic cross-section term 506 and the fine structure term 508 can be convolved with a low-loss region of any given energy-loss spectrum before such additive combination. That is, it can be the case that:

$$I(E) = B(E) + L(E) * [\sigma_{\mathrm{atomic}}(E) + F(E)]$$

where $L(E)$ can represent the low-loss region of the given energy-loss spectrum, and where (*) can represent a mathematical convolution operation. In other words, the given energy-loss spectrum can be considered as having an onset energy-loss of a K-edge, and the portion of that given energy-loss spectrum that extends from 0 eV of energy-loss to that onset energy-loss value can be considered as $L$. However, this is a mere non-limiting example. In various instances, $L$ does not have to extend to the onset of the K-edge (e.g., $L$ can stop at any suitable energy-loss value before or prior to the K-edge). In various cases, convolving the atomic cross-section term 506 and the fine structure term 508 (but not the background term 504) with that low-loss region can be considered as helping to reduce the occurrence of unwanted artifacts due to specimen thickness irregularities.

In any case, unlike the background term 504 and the atomic cross-section term 506, the fine structure term 508 can be considered as representing or encompassing the most informative or most interesting part of any given energy-loss spectrum (although elemental abundances, which can sometimes be considered interesting, can be inferred from the atomic-cross-section term 506).

In various aspects, when given the energy-loss spectrum of any pixel of the spectral image 304, the fitting component 314 can electronically fit the function 502 to that energy-loss spectrum. In other words, the fitting component 314 can electronically compute, electronically determine, or otherwise electronically identify whatever values of the one or more fitting coefficients 604, of the one or more fitting coefficients 608, and of the one or more fitting coefficients 612 that cause the function 502 to closely match or resemble that energy-loss spectrum of the given pixel. In other words, the fitting component 314 can electronically calculate or approximate whatever values of the one or more fitting coefficients 604, of the one or more fitting coefficients 608, and of the one or more fitting coefficients 612 that cause an error between the function 502 and that energy-loss spectrum to become minimized (e.g., to fall below any suitable threshold error value). In various instances, the fitting component 314 can accomplish this via the implementation of any suitable curve fitting technique. As a non-limiting example, the fitting component 314 can utilize a least sum of squares (LSS) technique to identify which values of the one or more fitting coefficients 604, of the one or more fitting coefficients 608, and of the one or more fitting coefficients 612 cause the function 502 to best match or fit the energy-loss spectrum. In various cases, the fitting component 314 can facilitate such fitting using any suitable software packages or platforms (e.g., quadratic programming in the Quadprog Python package).

In various embodiments, the fitting component 314 can enforce a zero-integral constraint on the fine structure term 508 during such fitting. That is, the fitting component 314 can electronically compute, determine, or otherwise identify whatever values of the one or more fitting coefficients 604, of the one or more fitting coefficients 608, and of the one or more fitting coefficients 612 that not only cause the function 502 to closely match or resemble the energy-loss spectrum of the given pixel, but that only cause an integral that is associated with the fine structure term 508 to become as close to zero as is feasible (e.g., to be within any suitable threshold margin of zero).

In some cases, such integral can be applied to the fine structure term 508 by itself. That is, the fitting component 314 can enforce the following equality when fitting the function 502 to the energy-loss spectrum of the given pixel:

$$\int_{E_0}^{E_{\mathrm{max}}} F(E)dE = 0$$

where $E_{max}$ can be whatever energy-loss value is high enough to encompass a desired edge that is present in the energy-loss spectrum of the given pixel (e.g., $E_{max} \geq 1300$ eV). Note that, if another edge in the energy-loss spectrum of the given pixel follows whichever edge is desired, then $E_{max}$ can be chosen to be large enough to encompass the desired edge while nevertheless being smaller than the onset energy-loss of that another edge.

In other cases, however, such integral can be applied to some constant multiple of the fine structure term 508. That is, the fitting component 314 can enforce the following equality when fitting the function 502 to the energy-loss spectrum of the given pixel:

$$C \int_{E_0}^{E_{max}} F(E)dE = 0$$

where C can represent any suitable constant.

In even other cases, however, such integral can be applied to any suitable composite function that includes the fine structure term 508. That is, the fitting component 314 can enforce the following equality when fitting the function 502 to the energy-loss spectrum of the given pixel:

$$\int_{E_0}^{E_{max}} D(E)F(E)dE = 0$$

where $D(E)$ can represent any suitable function of E.

Note that, in some cases, $E_{max}$ can be replaced with $\infty$ in any of the above integration-constraints, and $E_0$ can be replaced by 0 in any of the above integration constraints.

As a specific non-limiting example of how an integration constraint can be applied, consider the following discussion. The Bethe sum rule can be considered as stating that, when a system receives momentum $\vec{q}$, the transferred energy, summed over all internal modes of excitation, can be the same as the energy that is transferred to Z free electrons at rest. That is,

$$\int_{0}^{\infty} \frac{df(E, \vec{q})}{dE} dE = Z$$

where $\frac{df(E, \vec{q})}{dE}$ can be considered as the generalized oscillator strength for all electron shells. In various situations, it can be the case that only inner-shell electrons are of interest. Accordingly, the following can be expressed:

$$\int_{0}^{\infty} \frac{df_{inner}(E, \vec{q})}{dE} dE = Z_{inner}$$

where $\frac{df_{inner}(E, \vec{q})}{dE}$ can represent the generalized oscillator strength of the inner electron shell, and where $Z_{inner}$ can be the number of free electrons in the inner electron shell. For instance, for K-shells, $Z_{inner} = 2$. Now, as mentioned above, the atomic cross-section of an inner electron shell can be expressed as the following:

$$\sigma_{inner}(E) = \frac{4\pi a_0^2 R^2}{ET} \ln\left(1 + \frac{\beta^2}{\theta_E(E)^2}\right) \frac{df_{inner}(E, \vec{0})}{dE}$$

for Bohr radius $a_0$, for Rydberg energy $R$, for collection angle $\beta$, for effective incident energy $T$, and for characteristic angle $\theta_E(E)$. Moving all factors dependent on $E$ to the left, except for the generalized oscillator strength, and integrating with respect to energy-loss can yield the following:

$$\int_{0}^{\infty} \frac{E\sigma_{inner}(E)}{\ln\left(1 + \frac{\beta^2}{\theta_E(E)^2}\right)} dE = \frac{4\pi a_0^2 R^2}{T} \int_{0}^{\infty} \frac{df_{inner}(E, \vec{0})}{dE} dE$$

Since $\int_0^\infty \frac{df_{inner}(E,\vec{0})}{dE}\,dE$ is a constant as shown above, and since $\frac{4\pi a_0{}^2 R^2}{T}$ is also a constant, it follows that

$\int_0^\infty \frac{E\sigma_{inner}(E)}{\ln\left(1+\frac{\beta^2}{\theta_E(E)^2}\right)}\,dE$ is a constant, as well. This implies that, if one cross-section is known accurately, then every other measured cross-section should have the same value as that one cross-section. Now, in various aspects, atomic cross-sections can be computed for free atoms, whereas more general cross-sections can be computed for atoms that are not free due to environmental interactions. In various instances, the goal or objective of fitting can be to capture or encompass such environmental interactions by the fine structure term 508. Now, expressing a generic cross-section $\sigma(E)$ (which is not necessarily atomic) as the sum of the atomic cross-section of the corresponding element (e.g., $\sigma_A(E)$) and the fine structure (e.g., $\sigma(E) = \sigma_A(E) + F(E)$), and keeping the above insights in mind, it follows that the respective integrals are equal. Here follows the equation with those respective integrals:

$$\int_0^\infty \frac{E\sigma_A(E)}{\ln\left(1+\frac{\beta^2}{\theta_E(E)^2}\right)}\,dE$$

$$= \int_0^\infty \frac{E[\sigma_A(E)+F(E)]}{\ln\left(1+\frac{\beta^2}{\theta_E(E)^2}\right)}\,dE = \int_0^\infty \frac{E\sigma_A(E)}{\ln\left(1+\frac{\beta^2}{\theta_E(E)^2}\right)}\,dE + \int_0^\infty \frac{EF(E)}{\ln\left(1+\frac{\beta^2}{\theta_E(E)^2}\right)}\,dE$$

Subtracting $\int_0^\infty \frac{E\sigma_A(E)}{\ln\left(1+\frac{\beta^2}{\theta_E(E)^2}\right)}\,dE$ from each side yields the following:

$$\int_0^\infty \frac{EF(E)}{\ln\left(1+\frac{\beta^2}{\theta_E(E)^2}\right)}\,dE = 0$$

In various cases, the fine structure term 508 can be defined for the energy window $E \in [E_0, E_{max}]$ and can be zero otherwise (e.g., $F(E) = 0$ for $E < E_0$ which is before the desired edge or $E > E_{max}$ which is after the desired edge). So, consideration can be focused on the energy window. That is:

$$\int_{E_0}^{E_{max}} \frac{EF(E)}{\ln\left(1+\frac{\beta^2}{\theta_E(E)^2}\right)}\,dE = 0$$

Stated differently, it can be the case that $\int_{E_0}^{E_{max}} D(E)F(E)\,dE = 0$, where $D(E) = \frac{E}{\ln\left(1+\frac{\beta^2}{\theta_E(E)^2}\right)}$. In any case, this expression can be considered as a constraint on an integral associated with or otherwise related to the fine structure term 508 (e.g., on an integral of $F(E)$ with respect to $E$). In various instances, the fitting component 314 can enforce this integration constraint when fitting the function 502 to the energy-loss spectra of the spectral image 304. In other words, the fitting component 314 can identify which specific values of the one or more fitting coefficients 604, of the one or more fitting coefficients 608, and of the one or more fitting coefficients 612 that not only cause an error (e.g., LSS) between the function 502 and any given energy-loss spectrum of any given pixel to become minimized, but also that cause the expression

$\int_{E_0}^{E_{max}} \frac{EF(E)}{\ln\left(1+\frac{\beta^2}{\theta_E(E)^2}\right)}\,dE$ to fall within any suitable threshold margin of 0. In other words, the fine structure term 508 can be integration-constrained to zero during such fitting.

In various cases, the above formulation of the zero-integral constraint can be considered as being applicable to incoming electrons that are described as plane waves. In various aspects, analogous integration constraints can be derived for any suitable types or descriptions of incoming electrons. As a non-limiting example, suppose that a convergent incoming electron beam is used. In such case, the following zero-integral constraint can be derived:

$$\int_{E_0}^{E_{\max}} \frac{EF(E)}{\int_0^{\alpha+\beta} Q(\theta)\frac{2\pi\theta}{\theta^2+\theta_E(E)^2}d\theta}\,dE = 0$$

where $Q(\theta)$ can be considered as a correction factor that takes into account convergence angle of an incoming electron beam. Specifically, $Q(\theta)$ can be given by the following:

$$Q(\theta) = \begin{cases} \dfrac{\min(\alpha^2,\beta^2)}{\alpha^2}, \text{ for } 0 \le \theta \le |\alpha-\beta| \\ \dfrac{1}{\pi}\left[\arccos(x)+\dfrac{\beta^2}{\alpha^2}\arccos(y)-\dfrac{1}{2\alpha^2}\sqrt{4\alpha^2\beta^2+(\alpha^2+\beta^2-\theta^2)^2}\right], \text{ for } |\alpha-\beta| \le \theta \le \alpha+\beta \end{cases}$$

where $x = \dfrac{\alpha^2+\theta^2-\beta^2}{2\alpha\theta}$, where $y = \dfrac{\beta^2+\theta^2-\alpha^2}{2\beta\theta}$, where $\alpha$ is a convergence angle or convergence semi-angle, and where $\beta$ is a collection angle or collection semi-angle. Any other derivations of such zero-integral constraint for any other types of incoming electron beams can be implemented as appropriate.

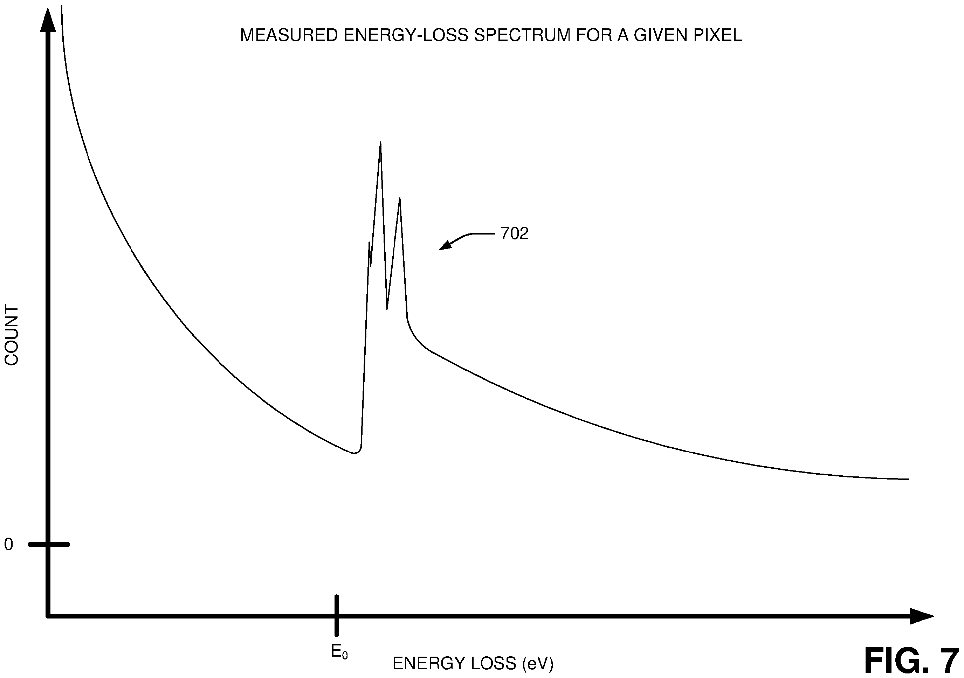

In any case, the function 502 can be an additive combination of the background term 504, the atomic cross-section term 506, and the fine structure term 508, and the fitting component 314 can electronically fit a respective version or instantiation of the function 502 to the energy-spectrum of each pixel of the spectral image. Thus, the fitting component 314 can generate a total of s distinct or unique fitted versions of the function 502, one per pixel of the spectral image 304. FIGs. 7-13 illustrate various non-limiting details regarding such fitting.

In various aspects, as shown, FIG. 7 depicts a curve 702. In various instances, the curve 702 can be considered as a graphical representation of a measured or recorded energy-loss spectrum for any given pixel of the spectral image 304. As shown, an independent variable (e.g., displayed on the abscissa axis) of the curve 702 can be energy-loss, and a dependent variable (e.g., displayed on the ordinate axis) of the curve 702 can be count or intensity. In various cases, as shown, a K-edge occurs in the curve 702 beginning at or around an energy-loss value of $E_0$. In various aspects, it can be desired to determine what specific values of the one or more fitting coefficients 604, of the one or more fitting coefficients 608, and of the one or more fitting coefficients 612 will cause the function 502 to match or otherwise become fitted to the curve 702.

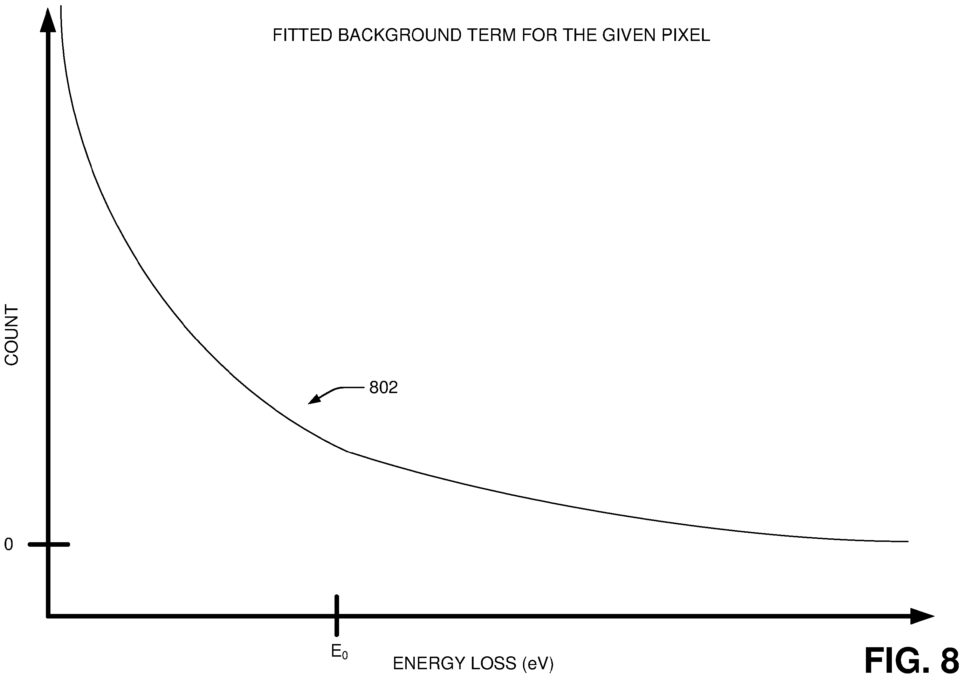

Now, FIG. 8 depicts a curve 802. In various aspects, the curve 802 can be considered as a graphical representation of the background term 504, after the function 502 has been fitted to the curve 702 as described herein. As can be seen, the curve 802 decays monotonically and thus explains or accounts for some portions of the curve 702, but the curve 802 does not account for the K-edge of the curve 702.

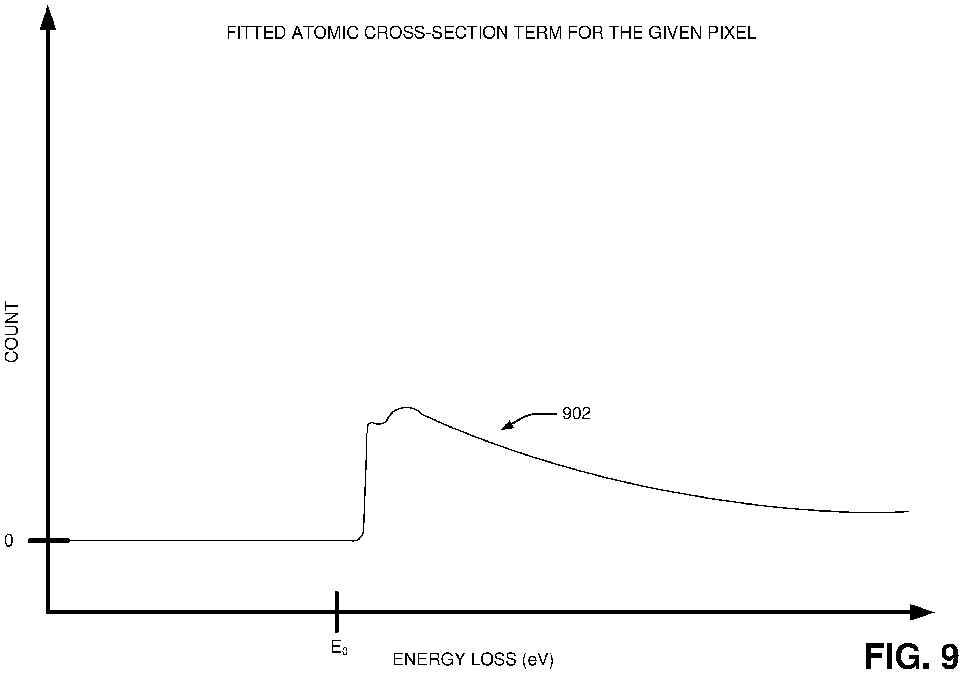

Next, FIG. 9 depicts a curve 902. In various instances, the curve 902 can be considered as a graphical representation of the atomic cross-section term 506, after the function 502 has been fitted to the curve 702 as described herein. As can be seen, the curve 902 can exhibit a sharp increase that is in phase with the K-edge of the curve 702, but the curve 902 does not account for the most interesting or informative activity or behavior of the K-edge of the curve 702.

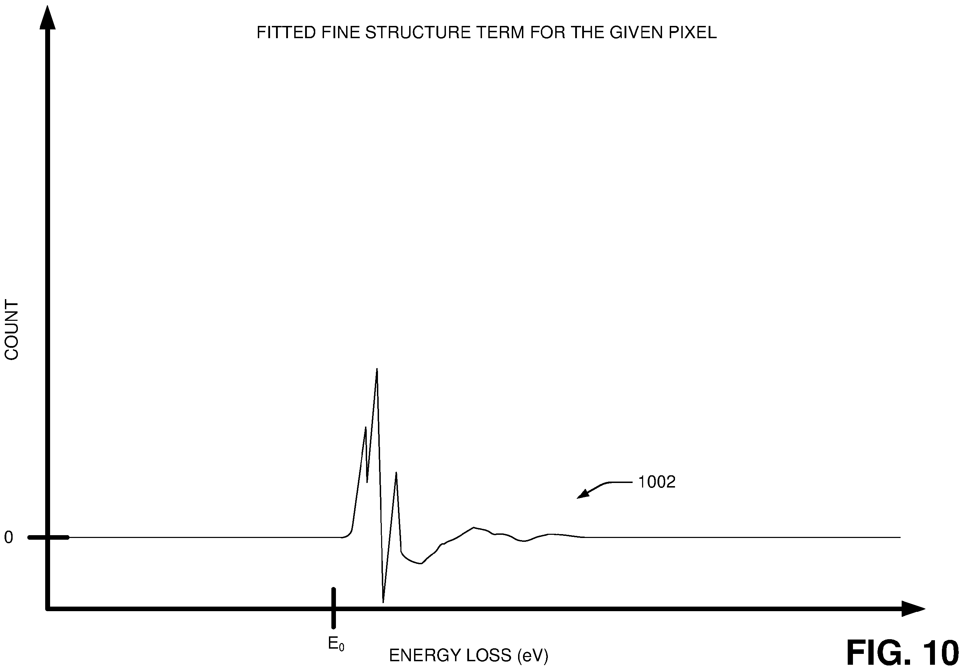

Lastly, FIG. 10 depicts a curve 1002. In various cases, the curve 1002 can be considered as a graphical representation of the fine structure term 508, after the function 502 has been fitted to the curve 702 as described herein. As can be seen, the curve 1002 can be considered as capturing or accounting for the most interesting or informative activity or behavior of the K-edge of the curve 702. In other words, the curve 802 and the curve 902 can be considered as capturing known or less informative portions of the curve 702, and the curve 1002 can be considered as capturing whatever portions of the curve 702 remain.

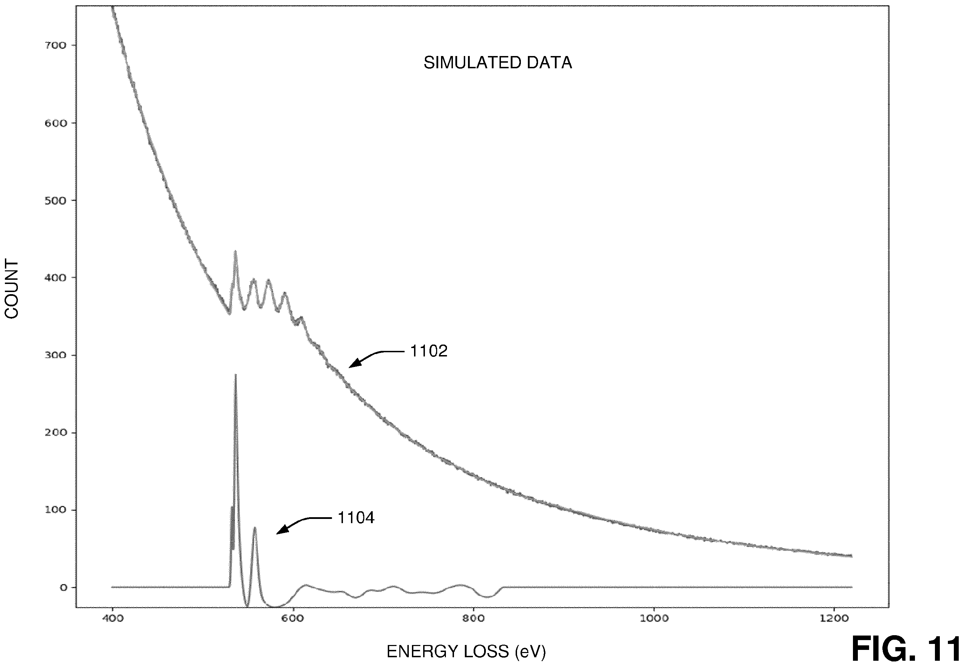

FIGs. 7-10 are illustrative recreations to help clarify various embodiments described herein. However, FIGs. 11-13 depict simulated and real-world experimental data that was obtained by the present inventors.

In particular, FIG. 11 illustrates a curve 1102 and a curve 1104. The curve 1102 depicts a computer-simulated energy-loss spectrum. The curve 1104 depicts a fitted, finalized, or resultant form of the fine structure term 508 after having been fitted to the curve 1102 as described herein.

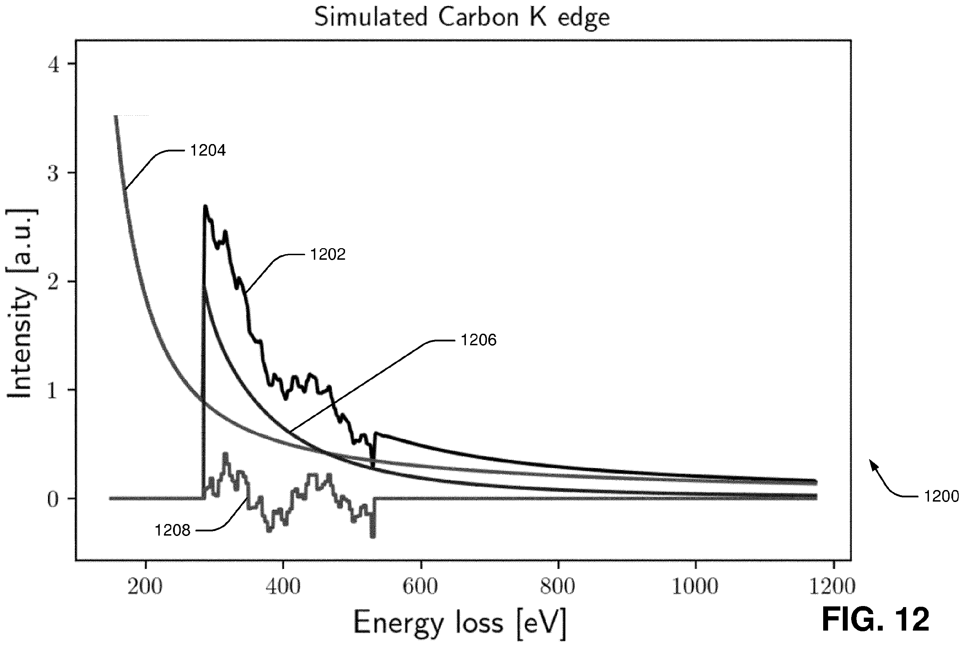

Similarly, FIG. 12 illustrates a curve 1202, a curve 1204, a curve 1206, and a curve 1208. The curve 1202 depicts a real-world energy-loss spectrum recorded by a real-world electron energy-loss microscope. The curve 1204 depicts a simulated version of the background term 504. The curve 1206 depicts a simulated version of the atomic cross-section term 506. The curve 1208 depicts a simulated version of the fine structure term 508.

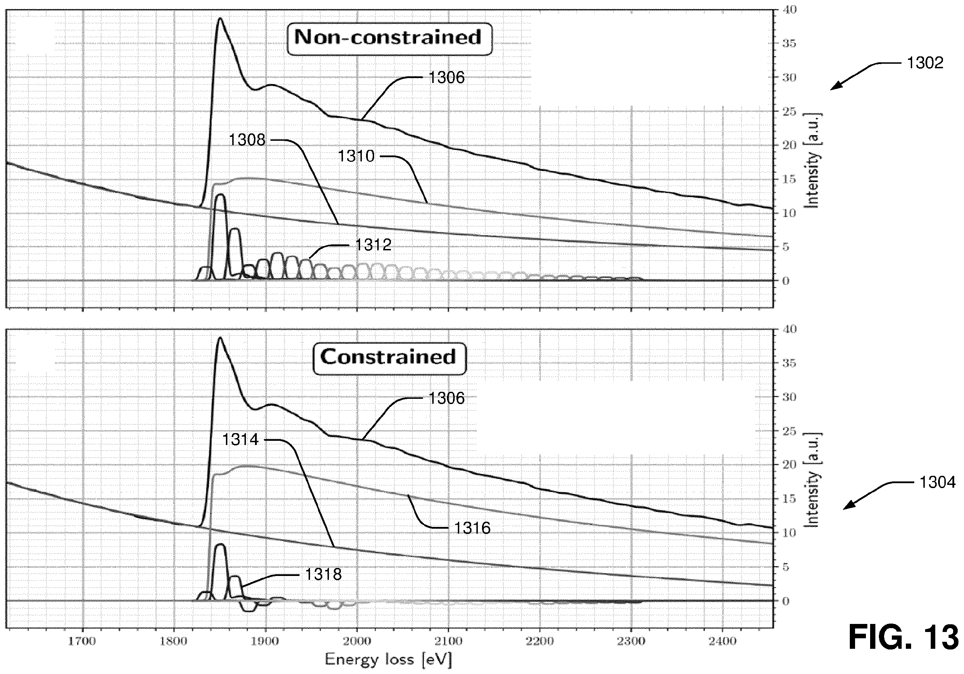

As described herein, the fine structure term 508 can be integration-constrained to zero. In various aspects, a consequence of such integration-constraint can be that at least some portions of the fine structure term 508 are negative (e.g., are less than zero) and that at least some other portions of the fine structure term 508 are positive (e.g., are greater than zero). Without such integration-constraint, the fine structure term 508 could instead be entirely positive. This is non-limitingly shown in FIG. 13.

In particular, FIG. 13 includes a graph 1302 and a graph 1304. The graph 1302 includes a curve 1306, a curve 1308, a curve 1310, and a curve 1312. The curve 1306 depicts a real-world energy-loss spectrum recorded by a real-world electron energy-loss microscope for a silicon specimen. In other words, the curve 1306 can be considered as illustrating a silicon K-edge. The curve 1308 depicts a fitted, finalized, or resultant form of the background term 504 after having been fitted to the curve 1306 as described herein. The curve 1310 depicts a fitted, finalized, or resultant form of the atomic cross-section term 506 (for silicon atoms) after having been fitted to the curve 1306 as described herein. The curve 1312 depicts a fitted, finalized, or resultant form of the fine structure term 508 (e.g., being a spline of rectangular functions) after having been fitted to the curve 1306. However, the curve 1312 was generated without the zero-integral constraint described herein. As shown, all portions of the curve 1312 are greater than or equal to zero. In other words, no portions of the curve 1312 are negative.

Now, the graph 1304 includes the curve 1306, a curve 1314, a curve 1316, and a curve 1318. The curve 1314 depicts another fitted, finalized, or resultant form of the background term 504 after having been fitted to the curve 1306 as described herein. The curve 1316 depicts another fitted, finalized, or resultant form of the atomic cross-section term 506 (for silicon atoms) after having been fitted to the curve 1306 as described herein. The curve 1318 depicts another fitted, finalized, or resultant form of the fine structure term 508 (e.g., being a spline of rectangular functions) after having been fitted to the curve 1306. However, the curve 1318 was generated with the zero-integral constraint described herein. As shown, the enforcement of such zero-integral constraint caused the heights of the curve 1314 and the curve 1316 to be different than those of the curve 1308 and the curve 1310, and the enforcement of such zero-integral constraint also caused at least some portions of the curve 1318 to be less than zero. This helps to demonstrate that enforcement of the zero-integral constraint as described herein can significantly alter whatever finalized, resultant, or fitted version of the fine structure term 508 is obtained.

It should be appreciated that FIGs. 7-13 are mere non-limiting examples that are not necessarily drawn to scale. In some cases, without the herein-described integral constraint, the function 502 could be entirely or predominantly positive or entirely or predominantly negative. In any case, when the herein-described integral constraint is implemented, the fine structure term 508 can be significantly different (indeed, significantly more accurate) than what it otherwise would be.

In any case, the fitting component 314 can generate a total of s distinct or unique fitted versions of the function 502: one per pixel of the spectral image 304.

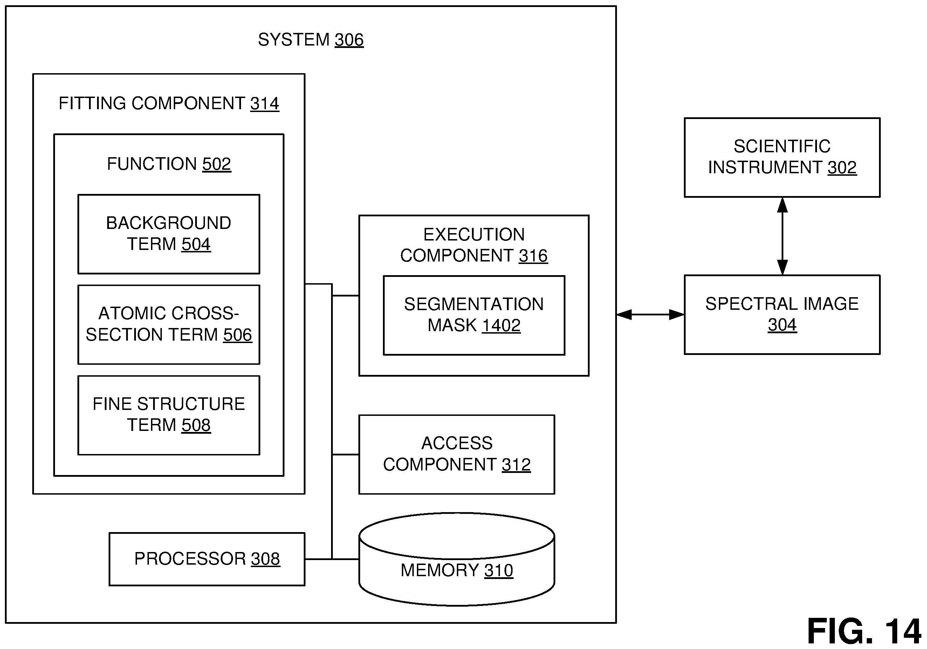

FIG. 14 illustrates a block diagram of an example, non-limiting system including a segmentation mask that can facilitate spectral image analysis via integration-constrained fitting in accordance with one or more embodiments described herein.

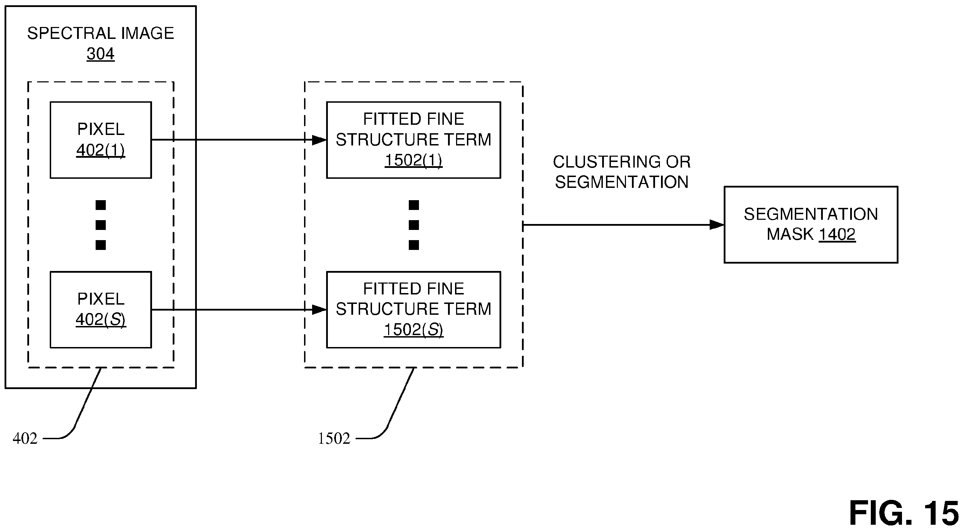

In various embodiments, the execution component 316 can electronically generate a segmentation mask 1402, based on the fitted pixel-wise versions of the fine structure term 508, rather than based on the entireties of the fitted pixel-wise versions of the function 502. Non-limiting aspects are described with respect to FIG. 15.

FIG. 15 illustrates an example, non-limiting block diagram showing how the segmentation mask 1402 can be generated in accordance with one or more embodiments described herein.

In various aspects, as described above, the fitting component 314 can generate a respective fitted version of the function 502 for each pixel of the spectral image 304. In various instances, each of those fitted versions of the function 502 can be considered as comprising a respective fitted version of the fine structure term 508. In various cases, those respective fitted versions of the fine structure term 508 can be referred to as a plurality of fitted fine structure terms 1502.

In particular, because the spectral image 304 can comprise s pixels, the plurality of fitted fine structure terms 1502 can comprise s fitted fine structure terms: a fitted fine structure term 1502(1) to a fitted fine structure term 1502(s). In various aspects, the fitted fine structure term 1502(1) can be considered as being whatever version of the fine structure term 508 that the fitting component 314 has computed for the pixel 402(1). In other words, the fitting component 314 can have computed a first version of the background term 504 (e.g., a first combination of specific values of the one or more fitting coefficients 604), a first version of the atomic cross-section term 506 (e.g., a first combination of specific values of the one or more fitting coefficients 608), and a first version of the fine structure term 508 (e.g., a first combination of specific values of the one or more fitting coefficients 612), all based on the energy-loss spectrum 404(1) of the pixel 402(1). In various cases, that first version of the fine structure term 508 can be referred to as the fitted fine structure term 1502(1). So, the fitted fine structure term 1502(1) can be considered as conveying whatever interesting or informative electronic activity is present in the energy-loss spectrum 404(1). Likewise, the fitted fine structure term 1502(s) can be considered as being whatever version of the fine structure term 508 that the fitting component 314 has computed for the pixel 402(s). That is, the fitting component 314 can have computed an s-th version of the background term 504 (e.g., an s-th combination of specific values of the one or more fitting coefficients 604), an s-th version of the atomic cross-section term 506 (e.g., an s-th combination of specific values of the one or more fitting coefficients 608), and an s-th version of the fine structure term 508 (e.g., an s-th combination of specific values of the one or more fitting coefficients 612), all based on the energy-loss spectrum 404(s) of the pixel 402(s). In various cases, that s-th version of the fine structure term 508 can be referred to as the fitted fine structure term 1502(s). So, the fitted fine structure term 1502(s) can be considered as conveying whatever interesting or informative electronic activity is present in the energy-loss spectrum 404(s).

In various aspects, the execution component 316 can electronically generate the segmentation mask 1402, based on the plurality of fitted fine structure terms 1502.

As a non-limiting example, the execution component 316 can apply any suitable unsupervised clustering technique, such as K-means clustering in conjunction with principal component analysis (PCA), to the plurality of fitted fine structure terms 1502. It is to be appreciated that any data formatting or pre-processing steps can be implemented prior to or during such clustering (e.g., normalizing amplitudes and energy axes of the plurality of fitted fine structure terms 1502 to unity; centering the plurality of fitted fine structure terms 1502 by subtracting mean counts or mean intensities). In any case, such clustering can cause the execution component 316 to separate the plurality of fitted fine structure terms 1502, and thus the plurality of pixels 402, into two or more clusters, where the fitted fine structure terms of any given cluster can be considered as being more numerically similar to each other than to the fitted fine structure terms of some different cluster. Because the fitted fine structure term of any given pixel can be considered as conveying the interesting or informative electronic behavior of whatever portion of the analytical specimen is represented by that given pixel, any two pixels that are in the same cluster as each other can be considered as representing portions of the analytical specimen that exhibit the same or similar electronic behavior as each other and thus that have the same or similar material composition as each other. In contrast, any two pixels that are in different clusters can be considered as representing portions of the analytical specimen that exhibit different electronic behaviors and thus that have different material compositions. In various aspects, each of the two or more clusters identified by the execution component 316 can be given a unique label (e.g., cluster 1, cluster 2, cluster 3), and the segmentation mask 1402 can be a matrix that indicates to which cluster respective pixels of the spectral image 304 are assigned. For instance, suppose again that the plurality of pixels 402 are arranged in an $x$-by-$y$ rectilinear array, where $xy = s$. In such case, the segmentation mask 1402 can be an $x$-by-$y$ array, where an $(a, b)$-th element of the segmentation mask 1402 can indicate the label of the cluster to which an $(a, b)$-th pixel of the plurality of pixels 402 is assigned, for row $a$ and column $b$. Thus, the segmentation mask 1402 can be considered as visually showing which pixels of the spectral image 304 are determined to belong to the same or different clusters, and thus are determined to be made up of the same or different materials or material concentrations, as each other. Indeed, the fitted fine structure term for any given pixel can be considered as indicating the surrounding, electronic environment of a desired element at whatever location is represented by the given pixel. In other words, the fitted fine structure can indicate which chemical compound that desired element is part of at the location represented by the given pixel.

As another non-limiting example, rather than using unsupervised clustering, the execution component 316 can instead execute on the plurality of fitted fine structure terms 1502 any suitable machine learning model that has been trained or configured to perform segmentation. Such execution can cause the machine learning model to produce as output the segmentation mask 1402.

In particular, the machine learning model can exhibit any suitable internal architecture, such as a deep learning neural network architecture. Indeed, in various cases, the machine learning model can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be long short-term memory (LSTM) layers, whose learnable or trainable parameters can be input-state weight matrices or hidden-state weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

Regardless of its specific internal architecture, the machine learning model can be trained (e.g., in supervised fashion using ground-truth segmentation masks, in unsupervised fashion without ground-truth segmentation masks, in reinforcement learning fashion via any suitable reward or punishment policy) to receive as input fitted fine structure terms and to produce as output segmentation masks based on those fitted fine structure terms. Accordingly, the execution component 316 can execute the machine learning model on the plurality of fitted fine structure terms 1502, and such execution can yield the segmentation mask 1402. More specifically, the execution component 316 can feed the plurality of fitted fine structure terms 1502 to an input layer of the machine learning model, the plurality of fitted fine structure terms 1502 can complete a forward pass through one or more hidden layers of the machine learning model, and an output layer of the machine learning model can compute the segmentation mask 1402 based on activation maps or feature maps generated by the one or more hidden layers.

In any case, the segmentation mask 1402 can indicate which pixels of the spectral image 304 belong to which ones of two or more defined classes, where those defined classes can be considered as representing distinct or unique material compositions.

In some embodiments, the execution component 316 can generate the segmentation mask 1402 based on the plurality of fitted fine structure terms 1502 in their entireties. However, in other embodiments, the execution component 316 can instead generate the segmentation mask 1402 based only on the fitting coefficients of the plurality of fitted fine structure terms 1502. That is, each of the plurality of fitted fine structure terms 1502 can be considered as having respective values of the one or more fitting coefficients 612, and the execution component 316 can perform clustering or machine learning model execution on those respective values of the one or more fitting coefficients 612 (e.g., in such cases, the remaining portions of each of the plurality of fitted fine structure terms 1502 can be ignored or discarded). The present inventors found that acceptable segmentation accuracy can be achieved in less time and with less computing resource consumption by clustering or otherwise analyzing the fitting coefficients of the plurality of fitted fine structure terms 1502.

In various aspects, the execution component 316 can electronically transmit the segmentation mask 1402 to any suitable computing device. In various instances, the execution component 316 can electronically render or display the segmentation mask 1402 on any suitable computer screen.

Although the herein disclosure mainly describes the execution component 316 as generating the segmentation mask 1402 for the spectral image 304, this is a mere non-limiting example for ease of explanation. In various other embodiments, the execution component 316 can perform any other suitable downstream analysis that pertains to the spectral image 304, and such analysis can be based on the plurality of fitted fine structure terms 1502 (or the fitting coefficients thereof, or any subset of such fitting coefficients) rather than on the raw energy-spectra of the spectral image 304. As a non-limiting example, the execution component 316 can classify the spectral image 304, based on the plurality of fitted fine structure terms 1502. As another non-limiting example, the execution component 316 can explicitly compute any suitable material composition of the analytical specimen depicted in the spectral image 304, based on the plurality of fitted fine structure terms 1502. Various other non-limiting examples of such downstream analyses can include: phase analysis; mobility mapping; or oxidation state mapping.

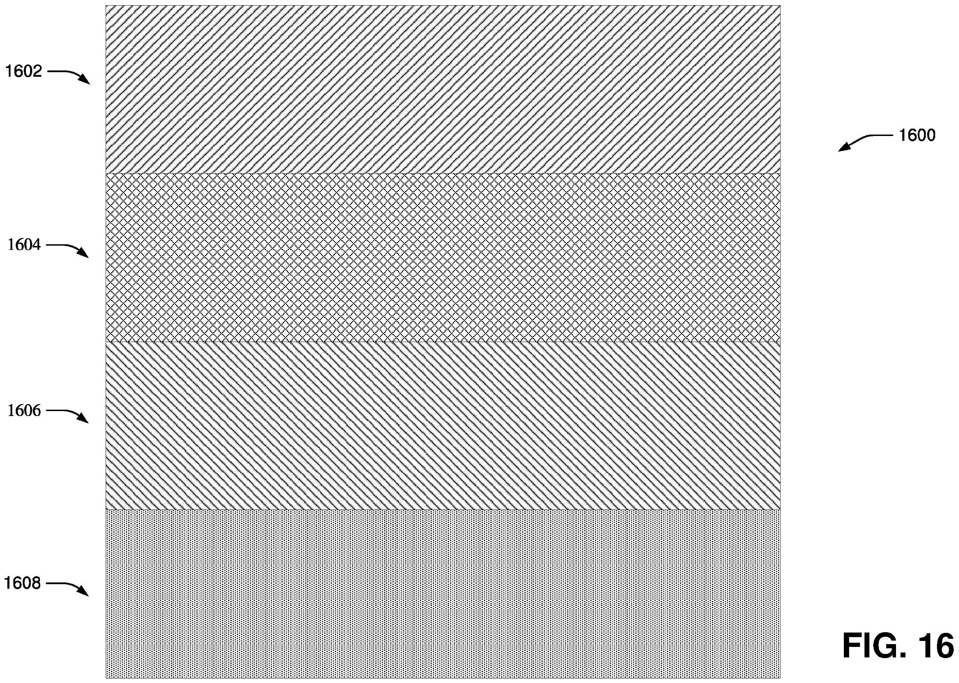

To demonstrate various technical benefits of various embodiments described herein, the present inventors conducted various experiments, some results of which are illustrated in FIGs. 16-23.

FIG. 16 depicts a block diagram of a specimen 1600 that was analyzed according to various embodiments described herein. The specimen 1600 comprised four regions: a region 1602; a region 1604; a region 1606; and a region 1608. The region 1602 was made up of AlaOs. The region 1604 was made up of $Cu_4O_2$. The region 1606 was made up of $Si_2O_4$. The region 1608 was made up of $Sr_1Ti_1O_3$. Furthermore, each of those four regions had a continuously varying thickness, increasing from 0.2 to 1.5 times the mean free path in twenty-five steps. A spectral image of the specimen 1600 was simulated, and fine structures were fitted as described herein to the energy-loss spectra of that spectral image.

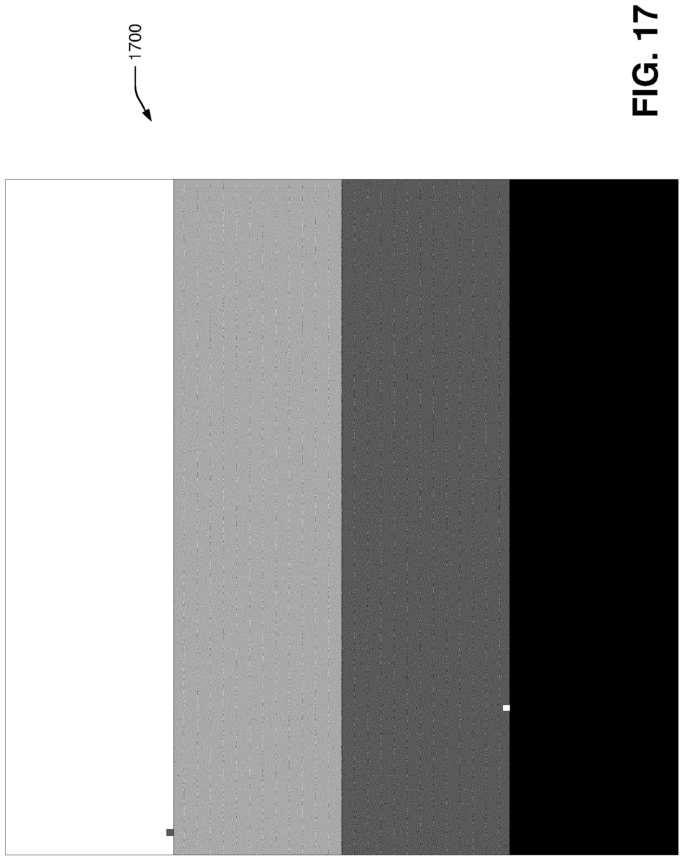

FIG. 17 illustrates a segmentation mask 1700 that was obtained from those fitted fine structures as described herein. In particular, the segmentation mask 1700 was obtained via K-means clustering. Different shades in FIG. 17 can be considered as indicating different material compositions. As shown, the segmentation mask 1700 shows with very high accuracy which portions of the specimen 1600 are made up of the same materials as each other. Indeed, only two pixels (e.g., one in the region 1602, and another in the region 1606) were misclassified or mis-segmented.

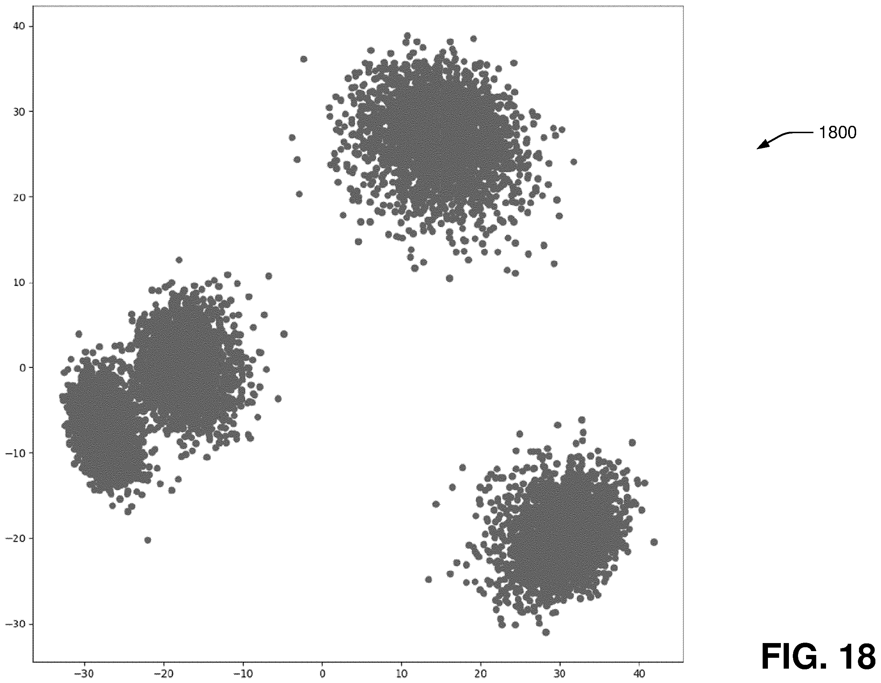

FIG. 18 illustrates a scatter plot 1800 that was generated via PCA from the data used for the above K-means clustering. As shown, the fitted fine structures that were obtained were neatly separated into four distinct, tight clusters (e.g., one cluster per material composition).

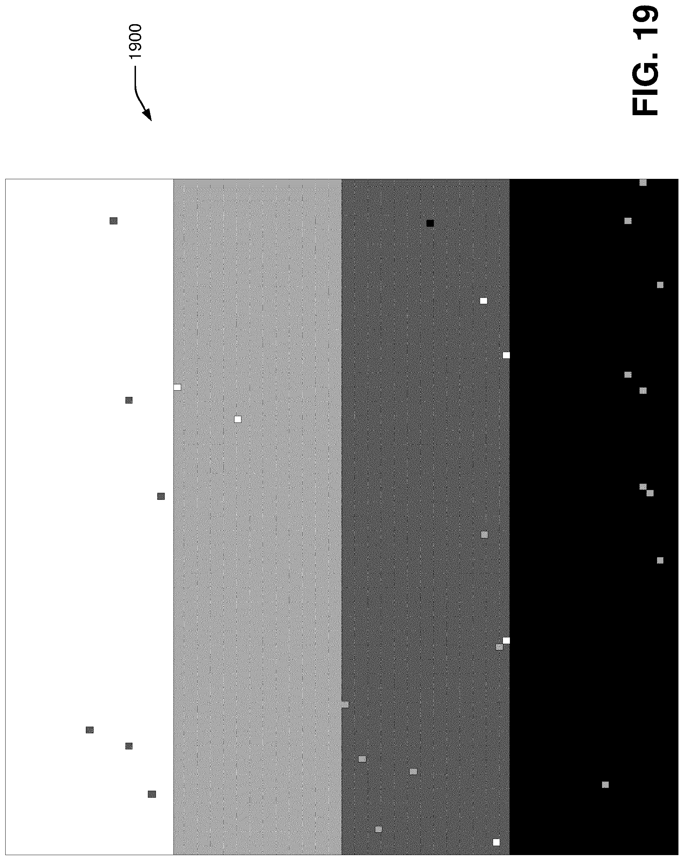

Now, FIG. 19 illustrates a segmentation mask 1900 that was obtained only from the finalized or resultant fitting coefficients of those fitted fine structures. As above, the segmentation mask 1900 was obtained via K-means clustering, and different shades in FIG. 19 can be considered as indicating different material compositions. As shown, the segmentation mask 1900 shows with slightly lower but still acceptable accuracy which portions of the specimen 1600 are made up of the same materials as each other. Indeed, more pixels were misclassified or mis-segmented as compared with FIG. 17, but the level of segmentation accuracy displayed is nevertheless sufficient.

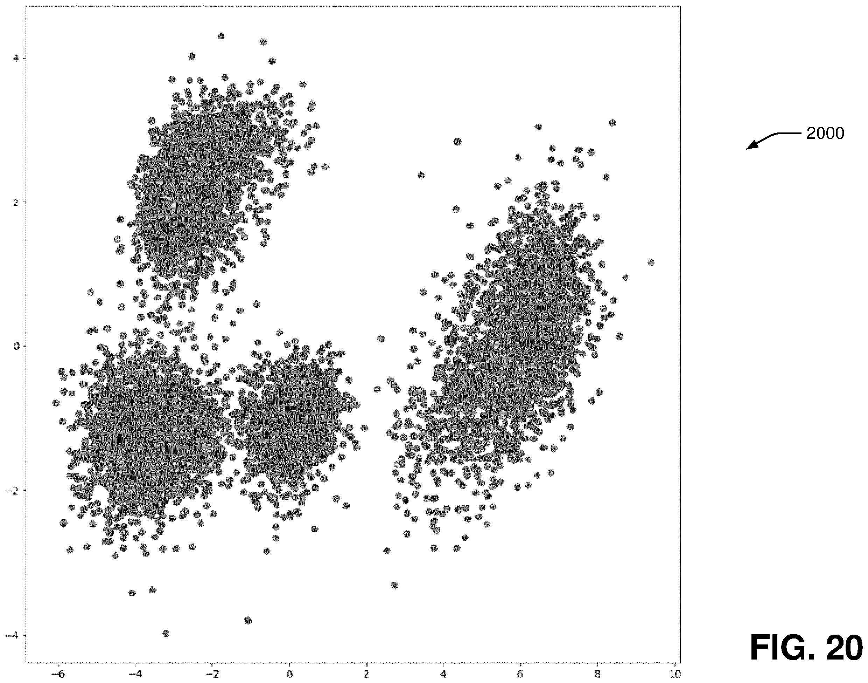

FIG. 20 illustrates a scatter plot 2000 that was generated via PCA from the data used for the above K-means clustering. As shown, the finalized or resultant fitting coefficients of the fitted fine structures that were obtained were still overall neatly separated into four distinct clusters (e.g., one cluster per material composition), although such clusters were slightly less tight than compared with FIG. 18. Note that it takes less time and computing resources (e.g., memory, processing capacity) to cluster only the coefficients of the fitted fine structure terms rather than to cluster the entireties of the fitted fine structure terms. But, as these experimental results demonstrate, acceptable segmentation accuracy can be achieved notwithstanding such reduced consumption of time and computing resources.

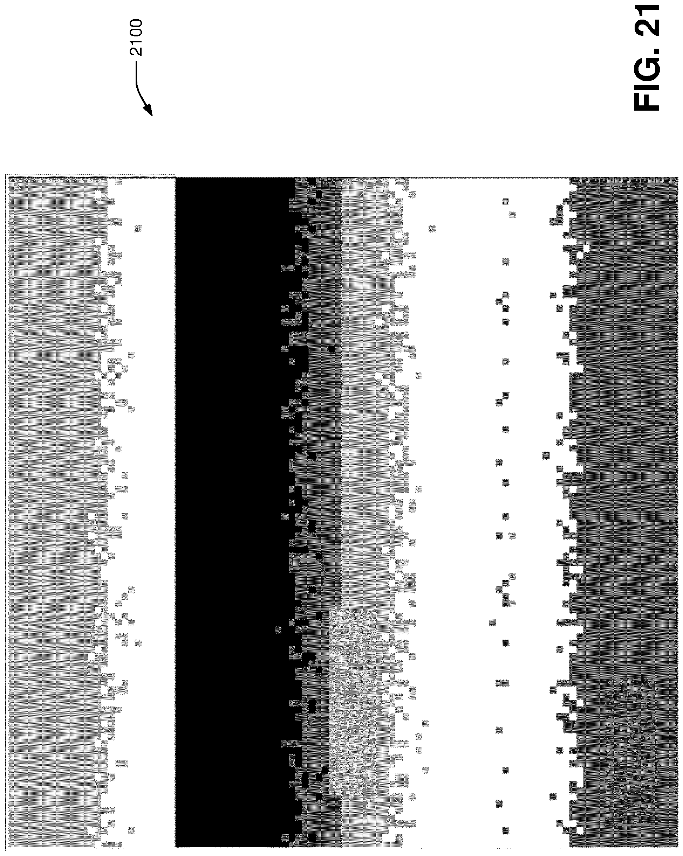

Now, FIG. 21 illustrates a segmentation mask 2100 that was obtained via existing techniques from the spectral image of the specimen 1600. In particular, such existing techniques did not involve the integration-constrained fine structure fitting described herein. As above, the segmentation mask 2100 was obtained via K-means clustering, and different shades in FIG. 21 can be considered as indicating different material compositions. As can be seen, the segmentation mask 2100 is highly inaccurate (e.g., does not reliably or correctly show which portions of the specimen 1600 are made up of the same materials as each other). Indeed, the segmentation mask 2100 shows that existing techniques were severely distracted or otherwise thrown off by the material composition and thickness differences throughout the specimen 1600.

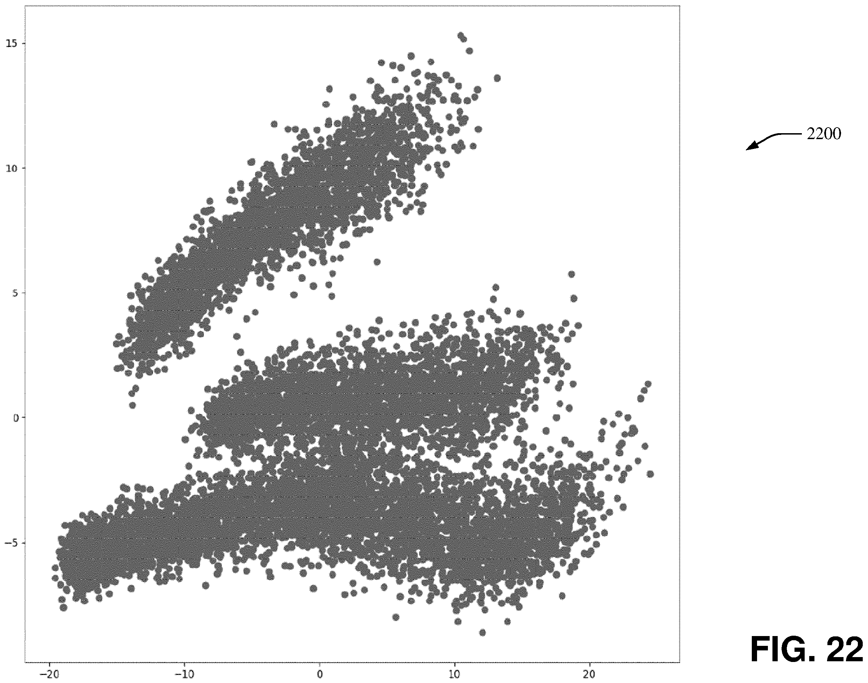

FIG. 22 illustrates a scatter plot 2200 that was generated via PCA from the data used for the above K-means clustering. As shown, the fitted fine structures that were obtained via existing techniques were not neatly or tightly separated into four distinct clusters. Again, this emphasizes that existing techniques were not able to handle the compositional and geometric diversity of the specimen 1600.

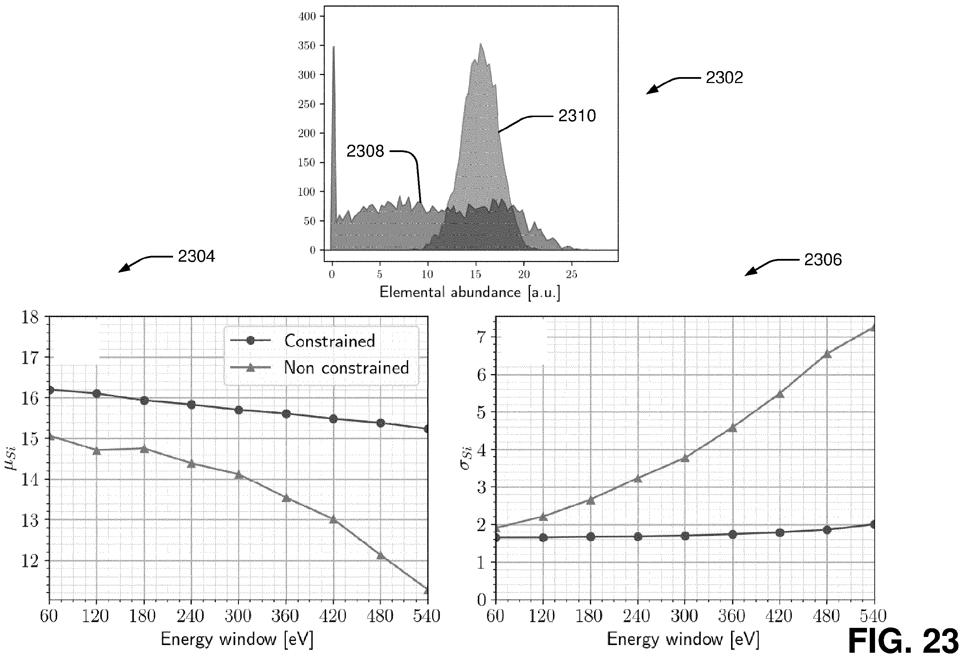

FIG. 23 illustrates a graph 2302, a graph 2304, and a graph 2306 that were obtained during various additional experiments conducted by the present inventors.

Specifically, 5000 energy-loss spectra were obtained for a silicon K-edge in an amorphous $Si_3N_4$ specimen while keeping illumination area constant. A parallel beam was used to maximize the illumination area such that electron beam damage and contamination were minimized. In one case, those 5000 energy-loss spectra were fitted using the zero-integral constraint described herein. In another cases, those 5000 energy-loss spectra were instead fitted without using the herein-described zero-integral constraint. In both cases, the fine structure term 508 was treated as a sum of 125 rectangular functions (e.g., $h_{max}$ = 125) with $\Delta E$ = 4 eV, thereby yielding an energy window of 500 eV. The present inventors found that, when the fitted coefficients of the atomic cross-sections and the integral-unconstrained fine structures were used in conjunction to estimate element abundance, the resultant abundance values (shown by numeral 2308 in the graph 2302) were widely spread out. In contrast, when the fitted coefficients of the atomic cross-sections and the integral-constrained fine structures were used to estimate element abundance, the resultant abundance values (shown by numeral 2310 in the graph 2302) were much more tight. In other words, the integral-constrained fine structures were found to result in much more precise element abundance determinations. A reason for this is that the function 502 can have very many fitting coefficients (e.g., 604, 608, 612) for which specific values need to be determined. This high volume of parameters can cause overfitting and noise sensitivity. However, the zero-integral constraint described herein can be considered as helping to reduce the likelihood of such overfitting and noise sensitivity.

The present inventors performed additional tests, to investigate how elemental abundance precision or accuracy can change depending upon energy window. For such tests, the same 5000 energy-loss spectra were used, but the energy window was variable from a low of 60 eV to a high of 540 eV in steps of 60 eV. Again, in one case, the integral-constraint described herein was used to fit the energy-loss spectra and to get resultant element abundances; and in another case, the integral-constraint was not used. The graph 2304 illustrates the average determined abundance of silicon as a function of energy window for both the integral-constrained and the integral-unconstrained cases. As shown, the average determined abundance for the unconstrained case changes significantly (e.g., drops by 25%) as energy window varies. In contrast, the average determined abundance for the constrained case changes only slightly (e.g., drops by only 6%) as energy window varies. The graph 2306 illustrates the standard deviation of the determined abundance of silicon as a function energy window for both the integral-constrained and the integral-unconstrained cases. As shown, the standard deviation for the unconstrained case nearly quadruples as energy window varies. In contrast, the standard deviation for the constrained case increases only slightly as energy window varies. These experimental results demonstrate that the zero-integral constraint described herein can be considered as significantly improving both accuracy and precision of downstream analyses for energy-loss spectra.

Accordingly, various embodiments described herein can be considered as facilitating improved spectral image analysis, via implementation of integration-constrained fitting of fine structures.

The scientific instrument systems, methods, or techniques disclosed herein may include interactions with a human user (e.g., via a user local computing device 2620 discussed herein with reference to FIG. 26). These interactions may include providing information to the user (e.g., information regarding the operation of a scientific instrument such as the scientific instrument 2610 of FIG. 26, information regarding a sample being analyzed or other test or measurement performed by a scientific instrument, information retrieved from a local or remote database, or other information) or providing an option for a user to input commands (e.g., to control the operation of a scientific instrument such as the scientific instrument 2610 of FIG. 26, or to control the analysis of data generated by a scientific instrument), queries (e.g., to a local or remote database), or other information. In some embodiments, these interactions may be performed through a graphical user interface (GUI) that includes a visual display on a display device (e.g., a display device 2510 discussed herein with reference to FIG. 25) that provides outputs to the user and/or prompts the user to provide inputs (e.g., via one or more input devices, such as a keyboard, mouse, trackpad, or touchscreen, included in other I/O devices 2512 discussed herein with reference to FIG. 25). The scientific instrument systems, methods, or techniques disclosed herein may include any suitable GUIs for interaction with a user.

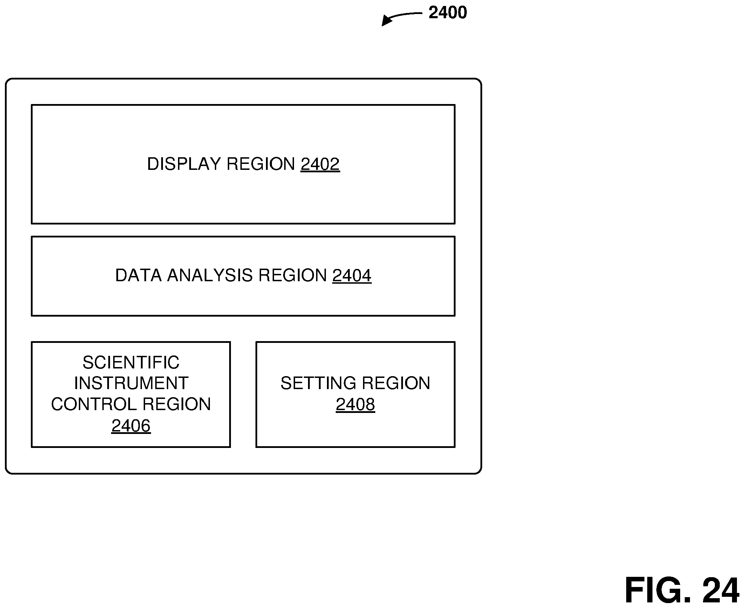

FIG. 24 depicts an example graphical user interface 2400 (hereafter "GUI 2400") that can be used in the performance of some or all of the support methods or techniques disclosed herein, in accordance with various embodiments. In various aspects, the GUI 2400 can be provided on any suitable electronic display (e.g., a display device 2510 discussed herein with reference to FIG. 25) of a computing device (e.g., a computing device 2500 discussed herein with reference to FIG. 25) of a scientific instrument support system (e.g., a scientific instrument support system 2600 discussed herein with reference to FIG. 26), and a user or technician can interact with the GUI 2400 using any suitable input device (e.g., any of other I/O devices 2512 discussed herein with reference to FIG. 25) and input technique (e.g., movement of a cursor, motion capture, facial recognition, gesture detection, voice recognition, actuation of buttons).

The GUI 2400 can include a data display region 2402, a data analysis region 2404, a scientific instrument control region 2406, and a setting region 2408. The particular number and arrangement of regions depicted in FIG. 24 is merely illustrative, and any number and arrangement of regions, including any desired features, can be included in other embodiments of the GUI 2400.

The data display region 2402 can display data generated by a scientific instrument (e.g., a scientific instrument 2610 discussed herein with reference to FIG. 26).

The data analysis region 2404 can display any suitable data analysis results (e.g., the results of analyzing the data illustrated in the data display region 2402 or other data). In some embodiments, the data display region 2402 and the data analysis region 2404 can be combined in the GUI 2400 (e.g., to include both data output from a scientific instrument and some analysis of the data in a common graph or region).

The scientific instrument control region 2406 can include options that allow a user or technician to control a scientific instrument (e.g., the scientific instrument 2610 discussed herein with reference to FIG. 26). For example, the scientific instrument control region 2406 can include configurable parameters that govern operation of such scientific instrument (e.g., configurable parameters that govern voltages or electric currents of the scientific instrument, that govern interior temperatures of the scientific instrument, or that govern fluid flow rates of the scientific instrument).

The setting region 2408 can include options that allow a user or technician to control any features or functions of the GUI 2400 (or of other GUIs) or to perform common computing operations with respect to the data display region 2402 and the data analysis region 2404 (e.g., saving data on a storage device, such as the storage device 2504 discussed herein with reference to FIG. 25, sending data to another user, labeling data).

As noted above, the scientific instrument module 102 can be implemented by one or more computing devices. FIG. 25 is a block diagram of a computing device 2500 that can perform some or all of the scientific instrument methods or techniques disclosed herein, in accordance with various embodiments. In some embodiments, the scientific instrument module 102 can be implemented by a single instance of the computing device 2500 or by multiple instances of the computing device 2500. Further, as discussed below, the computing device 2500 (or multiple instances thereof) that implements the scientific instrument module 102 can be part of one or more of a scientific instrument 2610, a user local computing device 2620, a service local computing device 2630, or a remote computing device 2640 of FIG. 26.

The computing device 2500 is illustrated as having a number of components, but any one or more of these components can be omitted or duplicated, as suitable for the application and setting. In some embodiments, some or all of the components included in the computing device 2500 can be attached to one or more motherboards and enclosed in a housing (e.g., including plastic, metal, or other materials). In some embodiments, some these components can be fabricated onto a single system-on-a-chip (SoC) (e.g., an SoC may include one or more instances of a processing device 2502 and one or more instances of a storage device 2504). Additionally, in various embodiments, the computing device 2500 can omit one or more of the components illustrated in FIG. 25, but can include interface circuitry (not shown) for coupling to the one or more omitted components using any suitable interface (e.g., a Universal Serial Bus (USB) interface, a High-Definition Multimedia Interface (HDMI) interface, a Controller Area Network (CAN) interface, a Serial Peripheral Interface (SPI) interface, an Ethernet interface, a wireless interface, or any other appropriate interface). For example, the computing device 2500 can omit a display device 2510, but can include display device interface circuitry (e.g., a connector and driver circuitry) to which a display device 2510 can be coupled.

The computing device 2500 can include a processing device 2502 (e.g., one or more processing devices). As used herein, the term "processing device" can refer to any device or portion of a device that processes electronic data from registers or memory to transform that electronic data into other electronic data that may be stored in registers or memories. The processing device 2502 can include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 2500 can include a storage device 2504 (e.g., one or more storage devices). The storage device 2504 can include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 2504 can include memory that shares a die with a processing device 2502. In such an embodiment, the memory may be used as cache memory and may include embedded dynamic random access memory (eDRAM) or spin transfer torque magnetic random access memory (STT-MRAM), for example. In some embodiments, the storage device 2504 can include non-transitory computer readable media having instructions thereon that, when executed by one or more processing devices (e.g., the processing device 2502), cause the computing device 2500 to perform any appropriate ones of or portions of the methods disclosed herein.

The computing device 2500 can include an interface device 2506 (e.g., one or more instances of the interface device 2506). The interface device 2506 can include one or more communication chips, connectors, or other hardware and software to govern communications between the computing device 2500 and other computing devices. For example, the interface device 2506 can include circuitry for managing wireless communications for the transfer of data to and from the computing device 2500. The term "wireless" and its derivatives may be used to describe circuits, devices, systems, methods, techniques, or communications channels that may communicate data through the use of modulated electromagnetic radiation through a nonsolid medium. The term does not imply that the associated devices do not contain any wires, although in some embodiments they might not. Circuitry included in the interface device 2506 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2")). In some embodiments, circuitry included in the interface device 2506 for managing wireless communications can operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 2506 for managing wireless communications can operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 2506 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 2506 may include one or more antennas (e.g., one or more antenna arrays) to receipt and/or transmission of wireless communications.

In some embodiments, the interface device 2506 can include circuitry for managing wired communications, such as electrical, optical, or any other suitable communication protocols. For example, the interface device 2506 can include circuitry to support communications in accordance with Ethernet technologies. In some embodiments, the interface device 2506 can support both wireless and wired communication, or can support multiple wired communication protocols or multiple wireless communication protocols. For example, a first set of circuitry of the interface device 2506 may be dedicated to shorter-range wireless communications such as Wi-Fi or Bluetooth, and a second set of circuitry of the interface device 2506 may be dedicated to longer-range wireless communications such as global positioning system (GPS), EDGE, GPRS, CDMA, WiMAX, LTE, EV-DO, or others. In some embodiments, a first set of circuitry of the interface device 2506 can be dedicated to wireless communications, and a second set of circuitry of the interface device 2506 can be dedicated to wired communications.

The computing device 2500 can include battery/power circuitry 2508. The battery/power circuitry 2508 can include one or more energy storage devices (e.g., batteries or capacitors) or circuitry for coupling components of the computing device 2500 to an energy source separate from the computing device 2500 (e.g., alternating current line power).

The computing device 2500 can include a display device 2510 (e.g., multiple display devices). The display device 2510 can include any visual indicators, such as a heads-up display, a computer monitor, a projector, a touchscreen display, a liquid crystal display (LCD), a light-emitting diode display, or a flat panel display.

The computing device 2500 can include other input/output (I/O) devices 2512. The other I/O devices 2512 can include one or more audio output devices (e.g., speakers, headsets, earbuds, alarms), one or more audio input devices (e.g., microphones or microphone arrays), location devices (e.g., GPS devices in communication with a satellite-based system to receive a location of the computing device 2500), audio codecs, video codecs, printers, sensors (e.g., thermocouples or other temperature sensors, humidity sensors, pressure sensors, vibration sensors, accelerometers, gyroscopes), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 2500 can have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer), a desktop computing device, or a server computing device or other networked computing component.

One or more computing devices implementing any of the scientific instrument modules, methods, or techniques disclosed herein may be part of a scientific instrument support system. FIG. 26 is a block diagram of an example scientific instrument support system 2600 in which some or all of the scientific instrument support methods disclosed herein may be performed, in accordance with various embodiments. The scientific instrument modules, methods, or techniques disclosed herein (e.g., the scientific instrument module 102, the computer-implemented method 200, the system 306) can be implemented by one or more of a scientific instrument 2610, a user local computing device 2620, a service local computing device 2630, or a remote computing device 2640 of the scientific instrument support system 2600.

Any of the scientific instrument 2610, the user local computing device 2620, the service local computing device 2630, or the remote computing device 2640 can include any of the embodiments of the computing device 2500, and any of the scientific instrument 2610, the user local computing device 2620, the service local computing device 2630, or the remote computing device 2640 can take the form of any appropriate ones of the embodiments of the computing device 2500.

The scientific instrument 2610, the user local computing device 2620, the service local computing device 2630, or the remote computing device 2640 may each include a processing device 2602, a storage device 2604, and an interface device 2606. The processing device 2602 may take any suitable form, including any form of the processing device 2502, and the processing devices 2602 included in different ones of the scientific instrument 2610, the user local computing device 2620, the service local computing device 2630, or the remote computing device 2640 may take the same form or different forms. The storage device 2604 may take any suitable form, including any form of the storage device 2504, and the storage devices 2604 included in different ones of the scientific instrument 2610, the user local computing device 2620, the service local computing device 2630, or the remote computing device 2640 may take the same form or different forms. The interface device 2606 may take any suitable form, including any form of the interface device 2506, and the interface devices 2606 included in different ones of the scientific instrument 2610, the user local computing device 2620, the service local computing device 2630, or the remote computing device 2640 may take the same form or different forms.

The scientific instrument 2610, the user local computing device 2620, the service local computing device 2630, and the remote computing device 2640 can be in communication with other elements of the scientific instrument support system 2600 via communication pathways 2608. The communication pathways 2608 may communicatively couple the interface devices 2606 of different ones of the elements of the scientific instrument support system 2600, as shown, and may be wired or wireless communication pathways (e.g., in accordance with any of the communication techniques discussed herein with reference to the interface device 2506). The particular scientific instrument support system 2600 depicted in FIG. 26 includes communication pathways between each pair of the scientific instrument 2610, the user local computing device 2620, the service local computing device 2630, and the remote computing device 2640, but this "fully connected" implementation is merely illustrative, and in various embodiments, various ones of the communication pathways 2608 may be absent. For example, in some embodiments, a service local computing device 2630 can lack a direct communication pathway 2608 between its interface device 2606 and the interface device 2606 of the scientific instrument 2610, but can instead communicate with the scientific instrument 2610 via the communication pathway 2608 between the service local computing device 2630 and the user local computing device 2620 and the communication pathway 2608 between the user local computing device 2620 and the scientific instrument 2610.

The scientific instrument 2610 may include any appropriate scientific instrument, such as the scientific instrument 302.

The user local computing device 2620 can be a computing device (e.g., in accordance with any of the embodiments of the computing device 2500) that is local to a user of the scientific instrument 2610. In some embodiments, the user local computing device 2620 may also be local to the scientific instrument 2610, but this need not be the case; for example, a user local computing device 2620 that is in a user's home or office may be remote from, but in communication with, the scientific instrument 2610 so that the user may use the user local computing device 2620 to control or access data from the scientific instrument 2610. In some embodiments, the user local computing device 2620 may be a laptop, smartphone, or tablet device. In some embodiments the user local computing device 2620 can be a portable computing device.

The service local computing device 2630 can be a computing device (e.g., in accordance with any of the embodiments of the computing device 2500) that is local to an entity that services the scientific instrument 2610. For example, the service local computing device 2630 may be local to a manufacturer of the scientific instrument 2610 or to a third-party service company. In some embodiments, the service local computing device 2630 can communicate with the scientific instrument 2610, the user local computing device 2620, or the remote computing device 2640 (e.g., via a direct communication pathway 2608 or via multiple "indirect" communication pathways 2608, as discussed above) to receive data regarding the operation of the scientific instrument 2610, the user local computing device 2620, or the remote computing device 2640 (e.g., the results of self-tests of the scientific instrument 2610, calibration coefficients used by the scientific instrument 2610, the measurements of sensors associated with the scientific instrument 2610). In some embodiments, the service local computing device 2630 may communicate with the scientific instrument 2610, the user local computing device 2620, or the remote computing device 2640 (e.g., via a direct communication pathway 2608 or via multiple "indirect" communication pathways 2608, as discussed above) to transmit data to the scientific instrument 2610, the user local computing device 2620, or the remote computing device 2640 (e.g., to update programmed instructions, such as firmware, in the scientific instrument 2610, to initiate the performance of test or calibration sequences in the scientific instrument 2610, to update programmed instructions, such as software, in the user local computing device 2620 or the remote computing device 2640). A user of the scientific instrument 2610 can utilize the scientific instrument 2610 or the user local computing device 2620 to communicate with the service local computing device 2630 to report a problem with the scientific instrument 2610 or the user local computing device 2620, to request a visit from a technician to improve the operation of the scientific instrument 2610, to order consumables or replacement parts associated with the scientific instrument 2610, or for other purposes.

The remote computing device 2640 can be a computing device (e.g., in accordance with any of the embodiments of the computing device 2500 discussed herein) that is remote from the scientific instrument 2610 or from the user local computing device 2620. In some embodiments, the remote computing device 2640 can be included in a datacenter or other large-scale server environment. In some embodiments, the remote computing device 2640 may include network-attached storage (e.g., as part of the storage device 2604). The remote computing device 2640 can store data generated by the scientific instrument 2610, perform analyses of the data generated by the scientific instrument 2610 (e.g., in accordance with programmed instructions), facilitate communication between the user local computing device 2620 and the scientific instrument 2610, or facilitate communication between the service local computing device 2630 and the scientific instrument 2610.

In some embodiments, one or more of the elements of the scientific instrument support system 2600 illustrated in FIG. 26 can be omitted. Further, in some embodiments, multiple ones of various ones of the elements of the scientific instrument support system 2600 of FIG. 26 may be present. For example, a scientific instrument support system 2600 can include multiple user local computing devices 2620 (e.g., different user local computing devices 2620 associated with different users or in different locations). In another example, a scientific instrument support system 2600 may include multiple scientific instruments 2610, all in communication with service local computing device 2630 and/or a remote computing device 2640; in such an embodiment, the service local computing device 2630 may monitor these multiple scientific instruments 2610, and the service local computing device 2630 may cause updates or other information may be "broadcast" to multiple scientific instruments 2610 at the same time. Different ones of the scientific instruments 2610 in a scientific instrument support system 2600 can be located close to one another (e.g., in the same room) or farther from one another (e.g., on different floors of a building, in different buildings, in different cities, etc.). In some embodiments, a scientific instrument 2610 can be connected to an Internet-of-Things (IoT) stack that allows for command and control of the scientific instrument 2610 through a web-based application, a virtual or augmented reality application, a mobile application, or a desktop application. Any of these applications can be accessed by a user operating the user local computing device 2620 in communication with the scientific instrument 2610 by the intervening remote computing device 2640. In some embodiments, a scientific instrument 2610 may be sold by the manufacturer along with one or more associated user local computing devices 2620 as part of a local scientific instrument computing unit 2612.

In some embodiments, different ones of the scientific instruments 2610 included in a scientific instrument support system 2600 may be different types of scientific instruments 2610; for example, one scientific instrument 2610 may be a mass spectrometer, while another scientific instrument 2610 may be a chromatograph or autosampler. In some such embodiments, the remote computing device 2640 or the user local computing device 2620 can combine data from different types of scientific instruments 2610 included in a scientific instrument support system 2600.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, $z = (z_1, z_2, z_3, z_4, z_n)$, to a confidence that the input belongs to a class, as by $f(z) = confidence(class)$. Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

In order to provide additional context for various embodiments described herein, FIG. 27 and the following discussion are intended to provide a brief, general description of a suitable computing environment 2700 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 27, the example environment 2700 for implementing various embodiments of the aspects described herein includes a computer 2702, the computer 2702 including a processing unit 2704, a system memory 2706 and a system bus 2708. The system bus 2708 couples system components including, but not limited to, the system memory 2706 to the processing unit 2704. The processing unit 2704 can be any of various commercially available processors. Dual microprocessors and other multi-processor architectures can also be employed as the processing unit 2704.

The system bus 2708 can be any of several types of bus structure that can further interconnect to a memory bus (with or without a memory controller), a peripheral bus, and a local bus using any of a variety of commercially available bus architectures. The system memory 2706 includes ROM 2710 and RAM 2712. A basic input/output system (BIOS) can be stored in a non-volatile memory such as ROM, erasable programmable read only memory (EPROM), EEPROM, which BIOS contains the basic routines that help to transfer information between elements within the computer 2702, such as during startup. The RAM 2712 can also include a high-speed RAM such as static RAM for caching data.

The computer 2702 further includes an internal hard disk drive (HDD) 2714 (e.g., EIDE, SATA), one or more external storage devices 2716 (e.g., a magnetic floppy disk drive (FDD) 2716, a memory stick or flash drive reader, a memory card reader, etc.) and a drive 2720, e.g., such as a solid state drive, an optical disk drive, which can read or write from a disk 2722, such as a CD-ROM disc, a DVD, a BD, etc. Alternatively, where a solid state drive is involved, disk 2722 would not be included, unless separate. While the internal HDD 2714 is illustrated as located within the computer 2702, the internal HDD 2714 can also be configured for external use in a suitable chassis (not shown). Additionally, while not shown in environment 2700, a solid state drive (SSD) could be used in addition to, or in place of, an HDD 2714. The HDD 2714, external storage device(s) 2716 and drive 2720 can be connected to the system bus 2708 by an HDD interface 2724, an external storage interface 2726 and a drive interface 2728, respectively. The interface 2724 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2702, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2712, including an operating system 2730, one or more application programs 2732, other program modules 2734 and program data 2736. All or portions of the operating system, applications, modules, or data can also be cached in the RAM 2712. The systems and methods described herein can be implemented utilizing various commercially available operating systems or combinations of operating systems.

Computer 2702 can optionally comprise emulation technologies. For example, a hypervisor (not shown) or other intermediary can emulate a hardware environment for operating system 2730, and the emulated hardware can optionally be different from the hardware illustrated in FIG. 27. In such an embodiment, operating system 2730 can comprise one virtual machine (VM) of multiple VMs hosted at computer 2702. Furthermore, operating system 2730 can provide runtime environments, such as the Java runtime environment or the .NET framework, for applications 2732. Runtime environments are consistent execution environments that allow applications 2732 to run on any operating system that includes the runtime environment. Similarly, operating system 2730 can support containers, and applications 2732 can be in the form of containers, which are lightweight, standalone, executable packages of software that include, e.g., code, runtime, system tools, system libraries and settings for an application.

Further, computer 2702 can be enable with a security module, such as a trusted processing module (TPM). For instance with a TPM, boot components hash next in time boot components, and wait for a match of results to secured values, before loading a next boot component. This process can take place at any layer in the code execution stack of computer 2702, e.g., applied at the application execution level or at the operating system (OS) kernel level, thereby enabling security at any level of code execution.

A user can enter commands and information into the computer 2702 through one or more wired/wireless input devices, e.g., a keyboard 2738, a touch screen 2740, and a pointing device, such as a mouse 2742. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2704 through an input device interface 2744 that can be coupled to the system bus 2708, but can be connected by other interfaces, such as a parallel port, an IEEE 1394 serial port, a game port, a USB port, an IR interface, a BLUETOOTH® interface, etc.

A monitor 2746 or other type of display device can be also connected to the system bus 2708 via an interface, such as a video adapter 2748. In addition to the monitor 2746, a computer typically includes other peripheral output devices (not shown), such as speakers, printers, etc.

The computer 2702 can operate in a networked environment using logical connections via wired or wireless communications to one or more remote computers, such as a remote computer(s) 2750. The remote computer(s) 2750 can be a workstation, a server computer, a router, a personal computer, portable computer, microprocessor-based entertainment appliance, a peer device or other common network node, and typically includes many or all of the elements described relative to the computer 2702, although, for purposes of brevity, only a memory/storage device 2752 is illustrated. The logical connections depicted include wired/wireless connectivity to a local area network (LAN) 2754 or larger networks, e.g., a wide area network (WAN) 2756. Such LAN and WAN networking environments are commonplace in offices and companies, and facilitate enterprise-wide computer networks, such as intranets, all of which can connect to a global communications network, e.g., the Internet.

When used in a LAN networking environment, the computer 2702 can be connected to the local network 2754 through a wired or wireless communication network interface or adapter 2758. The adapter 2758 can facilitate wired or wireless communication to the LAN 2754, which can also include a wireless access point (AP) disposed thereon for communicating with the adapter 2758 in a wireless mode.

When used in a WAN networking environment, the computer 2702 can include a modem 2760 or can be connected to a communications server on the WAN 2756 via other means for establishing communications over the WAN 2756, such as by way of the Internet. The modem 2760, which can be internal or external and a wired or wireless device, can be connected to the system bus 2708 via the input device interface 2744. In a networked environment, program modules depicted relative to the computer 2702 or portions thereof, can be stored in the remote memory/storage device 2752. It will be appreciated that the network connections shown are example and other means of establishing a communications link between the computers can be used.

When used in either a LAN or WAN networking environment, the computer 2702 can access cloud storage systems or other network-based storage systems in addition to, or in place of, external storage devices 2716 as described above, such as but not limited to a network virtual machine providing one or more aspects of storage or processing of information. Generally, a connection between the computer 2702 and a cloud storage system can be established over a LAN 2754 or WAN 2756 e.g., by the adapter 2758 or modem 2760, respectively. Upon connecting the computer 2702 to an associated cloud storage system, the external storage interface 2726 can, with the aid of the adapter 2758 or modem 2760, manage storage provided by the cloud storage system as it would other types of external storage. For instance, the external storage interface 2726 can be configured to provide access to cloud storage sources as if those sources were physically connected to the computer 2702.

The computer 2702 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH® wireless technologies. Thus, the communication can be a predefined structure as with a conventional network or simply an ad hoc communication between at least two devices.

FIG. 28 is a schematic block diagram of a sample computing environment 2800 with which the disclosed subject matter can interact. The sample computing environment 2800 includes one or more client(s) 2810. The client(s) 2810 can be hardware or software (e.g., threads, processes, computing devices). The sample computing environment 2800 also includes one or more server(s) 2830. The server(s) 2830 can also be hardware or software (e.g., threads, processes, computing devices). The servers 2830 can house threads to perform transformations by employing one or more embodiments as described herein, for example. One possible communication between a client 2810 and a server 2830 can be in the form of a data packet adapted to be transmitted between two or more computer processes. The sample computing environment 2800 includes a communication framework 2850 that can be employed to facilitate communications between the client(s) 2810 and the server(s) 2830. The client(s) 2810 are operably connected to one or more client data store(s) 2820 that can be employed to store information local to the client(s) 2810. Similarly, the server(s) 2830 are operably connected to one or more server data store(s) 2840 that can be employed to store information local to the servers 2830.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects are described in the following examples.

EXAMPLE 1: A system can comprise: a processor that executes computer-executable components stored in a non-transitory computer-readable memory, wherein the computer-executable components comprise: an access component that can access a spectral image of a specimen captured by a scientific instrument, wherein pixels of the spectral image respectively correspond to energy spectra; a fitting component that can fit in pixel-wise fashion a function to the energy spectra, wherein the function comprises a plurality of terms that are additively combined, wherein a first term of the plurality of terms represents a fine structure of the energy spectra, and wherein an integral associated with the first term is constrained to zero; and an execution component that can segment the spectral image by material, based on the first term.

EXAMPLE 2: The system of any preceding example can be implemented, wherein the plurality of terms can further comprise a second term that represents a monotonically decaying background of the energy spectra and a third term that represents an atomic cross-section of the energy spectra.

EXAMPLE 3: The system of any preceding example can be implemented, wherein the first term and the third term can be convolved with a low-loss portion of the energy spectra.

EXAMPLE 4: The system of any preceding example can be implemented, wherein the first term can comprise a spline whose basis functions are quadratic polynomials computed for quadratically-spaced intervals.

EXAMPLE 5: The system of any preceding example can be implemented, wherein the first term can comprise a spline whose basis functions are rectangular functions or triangular functions.

EXAMPLE 6: The system of any preceding example can be implemented, wherein the execution component can segment the spectral image by applying K-means clustering to, or by executing a trained machine learning model on, the first term of respective pixels of the spectra image.

EXAMPLE 7: The system of any preceding example can be implemented, wherein the execution component can segment the spectral image by applying K-means clustering to, or by executing a trained machine learning model on, fitting coefficients of the first term of respective pixels of the spectra image.

EXAMPLE 8: The system of any preceding example can be implemented, wherein the scientific instrument can be an electron energy-loss microscope.

In various embodiments, any combination or combinations of examples 1-8 can be implemented.

EXAMPLE 9: A computer-implemented method can comprise accessing, by a device operatively coupled to a processor, a spectral image of a specimen captured by a scientific instrument, wherein pixels of the spectral image respectively correspond to energy spectra; fitting, by the device and in pixel-wise fashion, a function to the energy spectra, wherein the function comprises a plurality of terms that are additively combined, wherein a first term of the plurality of terms represents a fine structure of the energy spectra, and wherein an integral associated with the first term is constrained to zero; and segmenting, by the device, the spectral image by material, based on the first term.

EXAMPLE 10: The computer-implemented method of any preceding example can be implemented, wherein the plurality of terms can further comprise a second term that represents a monotonically decaying background of the energy spectra and a third term that represents an atomic cross-section of the energy spectra.

EXAMPLE 11: The computer-implemented method of any preceding example can be implemented, wherein the first term and the third term can be convolved with a low-loss portion of the energy spectra.

EXAMPLE 12: The computer-implemented method of any preceding example can be implemented, wherein the first term can comprise a spline whose basis functions are quadratic polynomials computed for quadratically-spaced intervals.

EXAMPLE 13: The computer-implemented method of any preceding example can be implemented, wherein the first term can comprise a spline whose basis functions are rectangular functions or triangular functions.

EXAMPLE 14: The computer-implemented method of any preceding example can be implemented, wherein the segmenting the spectral image can be based on: applying, by the device, K-means clustering to the first term of respective pixels of the spectra image; or executing, by the device, a trained machine learning model on the first term of respective pixels of the spectra image.

EXAMPLE 15: The computer-implemented method of any preceding example can be implemented, wherein the segmenting the spectral image can be based on: applying, by the device, K-means clustering to fitting coefficients of the first term of respective pixels of the spectra image; or executing, by the device, a trained machine learning model on the fitting coefficients of the first term of respective pixels of the spectra image.

EXAMPLE 16: The computer-implemented method of any preceding example can be implemented, wherein the scientific instrument is an electron energy-loss microscope.

In various embodiments, any combination or combinations of examples 9-16 can be implemented.

EXAMPLE 17: A computer program product for facilitating spectral image analysis via integration-constrained fitting can comprise a non-transitory computer-readable memory having program instructions embodied therewith. In various aspects, the program instructions can be executable by a processor to cause the processor to: access a spectral image of a specimen captured by an electron energy-loss microscope, wherein pixels of the spectral image respectively correspond to energy-loss spectra; fit in pixel-wise fashion a function to the energy-loss spectra, wherein the function comprises a fine structure term, wherein an integral related to the fine structure term is constrained to zero; and segment the spectral image based on the fine structure term and not based on a remainder of the function.

EXAMPLE 18: The computer program product of any preceding example can be implemented, wherein the remainder of the function can comprise a monotonically decaying background term and an atomic cross-section term that are additively combined with the fine structure term.

EXAMPLE 19: The computer program product of any preceding example can be implemented, wherein the fine structure term and the atomic cross-section term, but not the monotonically decaying background term, can be convolved with a low-loss portion of the energy-loss spectra.

EXAMPLE 20: The computer program product of any preceding example can be implemented, wherein the fine structure term can comprise a spline whose basis functions are: quadratic polynomials computed for quadratically-spaced intervals; rectangular functions; or triangular functions.

In various embodiments, any combination or combinations of examples 17-20 can be implemented.

In various embodiments, any combination or combinations of examples 1-20 can be implemented.

**Claims**

1. A system, comprising:
   a processor that executes computer-executable components stored in a non-transitory computer-readable memory, wherein the computer-executable components comprise:

   an access component that accesses a spectral image of a specimen captured by a scientific instrument, wherein pixels of the spectral image respectively correspond to energy spectra;
   a fitting component that fits in pixel-wise fashion a function to the energy spectra, wherein the function comprises a plurality of terms that are additively combined, wherein a first term of the plurality of terms represents a fine structure of the energy spectra, and wherein an integral associated with the first term is constrained to zero; and
   an execution component that segments the spectral image by material, based on the first term.

2. The system of claim 1, wherein the plurality of terms further comprises a second term that represents a monotonically decaying background of the energy spectra and a third term that represents an atomic cross-section of the energy spectra.

3. The system of claim 2, wherein the first term and the third term are convolved with a low-loss portion of the energy spectra.

4. The system of claim 1, wherein the first term comprises a spline whose basis functions are quadratic polynomials computed for quadratically-spaced intervals, rectangular functions or triangular functions.

5. The system of claim 1, wherein the execution component segments the spectral image by applying K-means clustering to, or by executing a trained machine learning model either on the first term of respective pixels of the spectra image, or on fitting coefficients of the first term of respective pixels of the spectra image.

6. The system of any preceding claim, wherein the scientific instrument is an electron energy-loss microscope.

7. A computer-implemented method, comprising:

   accessing, by a device operatively coupled to a processor, a spectral image of a specimen captured by a scientific instrument, wherein pixels of the spectral image respectively correspond to energy spectra;
   fitting, by the device and in pixel-wise fashion, a function to the energy spectra, wherein the function comprises a plurality of terms that are additively combined, wherein a first term of the plurality of terms represents a fine structure of the energy spectra, and wherein an integral associated with the first term is constrained to zero; and
   segmenting, by the device, the spectral image by material, based on the first term.

8. The computer-implemented method of claim 7, wherein the plurality of terms further comprises a second term that represents a monotonically decaying background of the energy spectra and a third term that represents an atomic cross-section of the energy spectra.

9. The computer-implemented method of claim 8, wherein the first term and the third term are convolved with a low-loss portion of the energy spectra.

10. The computer-implemented method of claim 7, wherein the first term comprises a spline whose basis functions are quadratic polynomials computed for quadratically-spaced intervals, rectangular functions or triangular functions.

11. The computer-implemented method of claim 9, wherein the segmenting the spectral image is based on:

   applying, by the device, K-means clustering to the first term of respective pixels of the spectra image; or
   executing, by the device, a trained machine learning model either on the first term of respective pixels of the spectra image, or on the fitting coefficients of the first term of respective pixels of the spectra image.

12. The computer-implemented method of any one of claims 7-11, wherein the scientific instrument is an electron energy-loss microscope.

13. A computer program product for facilitating spectral image analysis via integration-constrained fitting, the computer program product comprising a non-transitory computer-readable memory having program instructions embodied therewith, the program instructions executable by a processor to cause the processor to carry out the method steps of any one of claims 7-12.

SCIENTIFIC INSTRUMENT MODULE
102

FIRST (IMAGE ACCESS)
LOGIC
104

SECOND (SPECTRA
FITTING) LOGIC
106

THIRD (SEGMENTATION)
LOGIC
108

# FIG. 1

200

PERFORM FIRST OPERATIONS ACCESSING A
SPECTRAL IMAGE OF A SPECIMEN CAPTURED
BY A SCIENTIFIC INSTRUMENT, WHEREIN PIXELS
OF THE SPECTRAL IMAGE RESPECTIVELY
CORRESPOND TO ENERGY SPECTRA

202

PERFORM SECOND OPERATIONS FITTING, IN
PIXEL-WISE FASHION, A FUNCTION TO THE
ENERGY SPECTRA, WHEREIN THE FUNCTION
COMPRISES A PLURALITY OF TERMS THAT ARE
ADDITIVELY COMBINED, WHEREIN A FIRST TERM
OF THE PLURALITY OF TERMS REPRESENTS A
FINE STRUCTURE OF THE ENERGY SPECTRA,
AND WHEREIN AN INTEGRAL ASSOCIATED WITH
THE FIRST TERM IS CONSTRAINED TO ZERO

204

PERFORM THIRD OPERATIONS SEGMENTING, BY
THE DEVICE, THE SPECTRAL IMAGE BY
MATERIAL, BASED ON THE FIRST TERM

206

# FIG. 2

**FIG. 3**

SCIENTIFIC INSTRUMENT 302

SPECTRAL IMAGE 304

SYSTEM 306

EXECUTION COMPONENT 316

ACCESS COMPONENT 312

MEMORY 310

FITTING COMPONENT 314

PROCESSOR 308

400

SPECTRAL IMAGE 304

PIXEL 402(1)

ENERGY-LOSS
COUNT
404(1)(1)

■ ■ ■

ENERGY-LOSS
COUNT
404(1)(T)

404(1)

402

■
■
■

PIXEL 402(S)

ENERGY-LOSS
COUNT
404(S)(1)

■ ■ ■

ENERGY-LOSS
COUNT
404(S)(T)

404(S)

FIG. 4

FIG. 5

SYSTEM 306

FITTING COMPONENT 314

FUNCTION 502

BACKGROUND TERM 504

ATOMIC CROSS-SECTION TERM 506

FINE STRUCTURE TERM 508

EXECUTION COMPONENT 316

ACCESS COMPONENT 312

PROCESSOR 308

MEMORY 310

SCIENTIFIC INSTRUMENT 302

SPECTRAL IMAGE 304

RESPECTIVELY COMPUTED FOR THE ENERGY LOSS
SPECTRUM OF EACH PIXEL OF THE SPECTRAL IMAGE 304

CONVOLVED WITH LOW-LOSS SPECTRUM

BACKGROUND TERM 504

POWERLAW FUNCTIONS 602

FITTING COEFFICIENTS 604

ATOMIC CROSS-SECTION TERM 506

MATERIAL-BASED PROBABILITY FUNCTIONS 606

FITTING COEFFICIENTS 608

FINE STRUCTURE TERM 508

BASIS FUNCTIONS 610

FITTING COEFFICIENTS 612

ADDITIVELY COMBINED

INTEGRATION-CONSTRAINED TO ZERO

FIG. 6

MEASURED ENERGY-LOSS SPECTRUM FOR A GIVEN PIXEL

COUNT

0

$E_0$

ENERGY LOSS (eV)

702

**FIG. 7**

FITTED BACKGROUND TERM FOR THE GIVEN PIXEL

FIG. 8

EP 4 621 396 A1

FITTED ATOMIC CROSS-SECTION TERM FOR THE GIVEN PIXEL

FIG. 9

FITTED FINE STRUCTURE TERM FOR THE GIVEN PIXEL

FIG. 10

FIG. 11

Simulated Carbon K edge

FIG. 12

EP 4 621 396 A1

FIG. 13

FIG. 14

EP 4 621 396 A1

SPECTRAL IMAGE
304

PIXEL
402(1)

■
■
■

PIXEL
402(S)

402

FITTED FINE
STRUCTURE TERM
1502(1)

■
■
■

FITTED FINE
STRUCTURE TERM
1502(S)

1502

CLUSTERING OR
SEGMENTATION

SEGMENTATION
MASK 1402

**FIG. 15**

EP 4 621 396 A1

**FIG. 16**

FIG. 17

FIG. 18

FIG. 19

FIG. 20

EP 4 621 396 A1

FIG. 21

EP 4 621 396 A1

FIG. 22

FIG. 23

2400

DISPLAY REGION 2402

DATA ANALYSIS REGION 2404

SCIENTIFIC INSTRUMENT CONTROL REGION 2406

SETTING REGION 2408

FIG. 24

COMPUTING DEVICE 2500

| PROCESSING DEVICE 2502 | BATTERY/POWER 2508 |

| STORAGE DEVICE 2504 | DISPLAY DEVICE 2510 |

| INTERFACE DEVICE 2506 | OTHER I/O DEVICES 2512 |

FIG. 25

2600

**FIG. 26**

FIG. 27

2800

2810
CLIENT(S)

2830
SERVER(S)

CLIENT
DATA
STORE(S)

2820

COMMUNICATION
FRAMEWORK

2850

SERVER
DATA
STORE(S)

2840

**FIG. 28**

Europäisches
Patentamt

European
Patent Office

Office européen
des brevets

# EUROPEAN SEARCH REPORT

**Application Number**

EP 24 16 4816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLANCO-PORTALS J. ET AL: "WhatEELS. A python-based interactive software solution for ELNES analysis combining clustering and NLLS", ULTRAMICROSCOPY, vol. 232, 1 January 2022 (2022-01-01), page 113403, XP093088632, NL ISSN: 0304-3991, DOI: 10.1016/j.ultramic.2021.113403 Retrieved from the Internet: URL:https://pdf.sciencedirectassets.com/271581/1-s2.0-S0304399121X00125/1-s2.0-S0304399121001819/main.pdf?X-Amz-Security-Token=IQoJb3JpZ2luX2VjEDwaCXVzLWVhc3QtMSJGMEQCIEJShhtY5GgHk3Y9ygS8s4m91RsTG25e5MVpDZDW8vwTAiBxO5h//fWxTW+UeD8Sw7jn4LtCbjbwPZLNF2j5uNevKiqzBQhFEAUaDDA1OTAwMzU0Njg2NSIMMcPFqZsOg4MrwjhXK> * the whole document * | 1-13 | INV. G01N23/06 G06T7/11 G06V10/762 |
| A | US 2020/003682 A1 (FRENKEL ANATOLY [US] ET AL) 2 January 2020 (2020-01-02) * paragraph [0005] - paragraph [0019] * * paragraph [0049] - paragraph [0064]; figures * | 1-13 | TECHNICAL FIELDS SEARCHED (IPC) G01N G06V G06T |
| T | DAEN JANNIS ET AL: "Improved precision and accuracy of electron energy-loss spectroscopy quantification via fine structure fitting with constrained optimization", ARXIV.ORG, CORNELL UNIVERSITY LIBRARY, 201 OLIN LIBRARY CORNELL UNIVERSITY ITHACA, NY 14853, 19 August 2024 (2024-08-19), XP091857968, * the whole document * | | |

The present search report has been drawn up for all claims

| Place of search | Date of completion of the search | Examiner |
|---|---|---|
| The Hague | 13 September 2024 | Savage, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4816

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | Publication date |
|---|---|---|---|
| US 2020003682 A1 | 02-01-2020 | NONE | |

EPO FORM P0459

For more details about this annex : see Official Journal of the European Patent Office, No. 12/82